# EUROPÄISCHE PATENTANMELDUNG

(11) **EP 4 019 739 A1**
(43) Veröffentlichungstag der Anmeldung: **29.06.2022**
(21) Anmeldenummer: 21213007.4
(22) Anmeldetag: 08.12.2021
(51) Int. Cl.: F01C 1/22, F01C 20/04, F01C 20/24, F01C 21/18, F02B 53/00

(54) **ROTATIONSKOLBENMASCHINE ZUM REGELN VON GASDRÜCKEN IN EINEM GASLEITUNGSNETZ UND VERFAHREN ZUM BETREIBEN EINES GASDRUCK-REGELSYSTEMS MIT DER ROTATIONSKOLBENMASCHINE**

(30) Priorität: 23.12.2020 DE 102020134889
(71) Anmelder: Westenergie AG, 45128 Essen (DE)
(72) Erfinder: Schaarschmidt, Gunnar, 45770 Marl (DE); Lenth, Burkhard, 44575 Castrop-Rauxel (DE)
(74) Vertreter: Bals & Vogel Patentanwälte PartGmbB

(57) **Zusammenfassung**

Die Erfindung betrifft eine Rotationskolbenmaschine (11) zum Regeln von unterschiedlichen Gasdrücken in einem Gasleitungsnetz (12) durch einen Kompressionsbetrieb zum Komprimieren von Niederdruckgas in Hochdruckgas und durch einen Expansionsbetrieb zum Expandieren von Hochdruckgas in Niederdruckgas mittels Hochdruck-Drehschieber (40, 42) und Niederdruck-Drehschieber (41, 43), wobei die Rotationskolbenmaschine (11) wenigstens ein Gehäusevolumen (16, 36) aufweist und die Hochdruck-Drehschieber (40, 42) jeweils wenigstens teilweise zylinderförmig mit jeweils einer radialen ersten Hochdruck-Durchgangsöffnung (50), zum Leiten des Hochdruckgases in das Gehäusevolumen (16) und aus dem Gehäusevolumen (16), und/oder die Niederdruck-Drehschieber (41, 43) jeweils wenigstens teilweise zylinderförmig mit jeweils einer radialen ersten Niederdruck-Durchgangsöffnung (51), zum Leiten des Niederdruckgases in das Gehäusevolumen (16) und aus dem Gehäusevolumen (16), aufweisen.

## Beschreibung

Die vorliegende Erfindung betrifft eine Rotationskolbenmaschine zum Regeln von unterschiedlichen Gasdrücken in einem Gasleitungsnetz durch einen Kompressionsbetrieb zum Komprimieren von Niederdruckgas in Hochdruckgas und durch einen Expansionsbetrieb zum Expandieren von Hochdruckgas in Niederdruckgas. Die Erfindung betrifft ferner ein Gasdruck-Regelsystem mit einer solchen Rotationskolbenmaschine sowie ein Verfahren zum Betreiben eines solchen Gasdruck-Regelsystems.

In der europäischen Patentanmeldung EP 3 091 176 A1 wird eine vom Wankelmotor inspirierte Rotationskolbenmaschine zum Regeln von unterschiedlichen Gasdrücken in einem Gasleitungsnetz beschrieben. Die Rotationskolbenmaschine ist gleichermaßen geeignet, Niederdruckgas in einem Kompressionsbetrieb zu verdichten oder Hochdruckgas in einem Expansionsbetrieb zu entspannen. Dabei vereint die Rotationskolbenmaschine durch ihre spezielle Bauart die Vorteile von Kolbenmaschinen und Turbinen.

Ein Wankelmotor ist eine Verbrennungsmaschine, die ihre Rotationsenergie aus der Ausdehnung des verbrennenden Treibstoff-Luft-Gemischs bezieht. Ein Zyklus von Ansaugen, Verdichten, Verbrennen bzw. Entspannen und Ausstoßen wird im Rahmen einer vollständigen Umdrehung des Rotationskolbens um 360° durchgeführt. Die in der EP 3 091 176 A1 beschriebene Rotationskolbenmaschine sieht dem Wankelmotor zwar ähnlich und weist auch ein ähnliches Funktionsmuster auf, ist aber keine Verbrennungsmaschine. Im Kompressionsbetreib ist der Zyklus bereits nach dem Verdichten, also nach 180° abgeschlossen. Die erforderliche Rotationsenergie muss extern über eine Welle zugeführt werden. Der Expansionsbetrieb benötigt für das Entspannen und das Ausstoßen ebenfalls nur 180°. Die der Energie des Arbeitsgases bzw. Hochdruckgases entzogene mechanische Arbeit wird als Rotationsenergie an die Welle abgegeben. Die Rotationskolbenmaschine nutzt demnach unter Beibehaltung der Drehrichtung im Kompressionsbetrieb nur die ersten 180° und im Expansionsbetrieb die zweiten 180°. Da sich beide Betriebsmodi gegenseitig ausschließen, laufen die jeweils anderen 180° leer.

Aufgabe der vorliegenden Erfindung ist es, der voranstehend beschriebenen Problematik zumindest teilweise Rechnung zu tragen. Insbesondere ist es Aufgabe der vorliegenden Erfindung, eine gattungsgemäße Rotationskolbenmaschine mit Verbesserungen hinsichtlich einer möglichst effizienten und/oder stabilen Betriebsweise zu schaffen.

Die voranstehende Aufgabe wird durch die Patentansprüche gelöst. Insbesondere wird die voranstehende Aufgabe durch die Rotationskolbenmaschine gemäß Anspruch 1, den Druckpufferspeicher gemäß Anspruch 12, den Drehschieber gemäß Anspruch 14, das Gasdruck-Regelsystem gemäß Anspruch 15, das Verfahren gemäß Anspruch 16, das Computerprogrammprodukt gemäß Anspruch 17 sowie das Speichermittel gemäß Anspruch 18 gelöst. Weitere Vorteile der Erfindung ergeben sich aus den Unteransprüchen, der Beschreibung und den Figuren. Dabei gelten Merkmale, die im Zusammenhang mit der Rotationskolbenmaschine beschrieben sind, selbstverständlich auch im Zusammenhang mit dem erfindungsgemäßen Druckpufferspeicher, dem erfindungsgemäßen Drehschieber, dem erfindungsgemäßen Gasdruck-Regelsystem, dem erfindungsgemäßen Verfahren, dem erfindungsgemäßen Computerprogrammprodukt, dem erfindungsgemäßen Speichermittel und jeweils umgekehrt, sodass bezüglich der Offenbarung zu den einzelnen Erfindungsaspekten stets wechselseitig Bezug genommen wird und/oder werden kann.

Gemäß einem ersten Aspekt der vorliegenden Erfindung wird eine Rotationskolbenmaschine zum Regeln von unterschiedlichen Gasdrücken in einem Gasleitungsnetz durch einen Kompressionsbetrieb zum Komprimieren von Niederdruckgas in Hochdruckgas und durch einen Expansionsbetrieb zum Expandieren von Hochdruckgas in Niederdruckgas zur Verfügung gestellt. Die Rotationskolbenmaschine weist ein Kolbengehäuse auf, das einen ersten Gehäuseteil mit einer kreissegmentförmigen Innenkontur und einen zweiten Gehäuseteil mit einer kreissegmentförmigen Innenkontur umfasst, wobei der erste Gehäuseteil und der zweite Gehäuseteil zusammen eine Gehäuseinnenwandung mit einer trochoidenförmigen Gehäuseinnenkontur zum Definieren eines Gehäusevolumens bilden. Die Rotationskolbenmaschine weist ferner einen dreieckigen Rotationskolben, der rotierbar im Gehäusevolumen angeordnet ist, eine Exzenterwelle mit einem Exzenter, und eine Gasströmungseinstelleinheit zum Einstellen einer Gasströmung in das Gehäusevolumen und einer Gasströmung aus dem Gehäusevolumen, auf. Am und/oder im ersten Gehäuseteil sind eine erste Hochdrucköffnung zum Einlassen von Hochdruckgas in das Gehäusevolumen sowie zum Auslassen von Hochdruckgas aus dem Gehäusevolumen und eine erste Niederdrucköffnung zum Einlassen von Niederdruckgas in das Gehäusevolumen sowie zum Auslassen von Niederdruckgas aus dem Gehäusevolumen ausgestaltet. Am und/oder im zweiten Gehäuseteil sind eine zweite Hochdrucköffnung zum Einlassen von Hochdruckgas in das Gehäusevolumen sowie zum Auslassen von Hochdruckgas aus dem Gehäusevolumen und eine zweite Niederdrucköffnung zum Einlassen von Niederdruckgas in das Gehäusevolumen sowie zum Auslassen von Niederdruckgas aus dem Gehäusevolumen ausgestaltet. Die Gasströmungseinstelleinheit ist zum gegenläufigen Einlassen des Hochdruckgases in das Gehäusevolumen durch die erste Hochdrucköffnung und die zweite Hochdrucköffnung und/oder zum gegenläufigen Einlassen des Niederdruckgases in das Gehäusevolumen durch die erste Niederdrucköffnung und die zweite Niederdrucköffnung konfiguriert.

Die erfindungsgemäße Verbesserung besteht demnach insbesondere darin, die Gaseinlässe und die Gasauslässe bzw. die entsprechenden Hoch- und Niederdruckleitungen des Kolbengehäuses dahingehend anzuordnen, dass die in der Beschreibungseinleitung beschriebenen, leerlaufenden 180° eines Rotationskolbens im Gehäusevolumen mitgenutzt werden können. Damit können in einem zugehörigen System insbesondere Verbesserungen hinsichtlich Thermodynamik und Mechanik erreicht werden. Im Kompressionsbetrieb wird aus einer bislang ungenutzten Niederdrucköffnung ein zweiter Niederdruckgas-Einlass bzw. die zweite Niederdrucköffnung gemacht. Aus einer bislang ungenutzten Hochdrucköffnung wird ein zweiter Hochdruckgas-Auslass bzw. die zweite Hochdrucköffnung gemacht. Analog wird im Expansionsbetrieb aus einer bislang ungenutzten Niederdrucköffnung ein zweiter Niederdruckgas-Auslass bzw. die zweite Niederdrucköffnung gemacht. Aus einer bislang ungenutzten Hochdrucköffnung wird ein zweiter Hochdruckgas-Einlass bzw. die zweite Hochdrucköffnung gemacht. Dies ermöglicht eine Rotationskolbenmaschine, die im Vergleich zu der eingangs erwähnten Rotationskolbenmaschine des Standes der Technik bei gleichbleibender Größe in beiden Betriebsmodi, also im Expansionsbetrieb sowie im Kompressionsbetrieb, den doppelten Volumenstrom und eine entsprechend höhere Effizienz erreicht.

Unter dem dreieckigen Rotationskolben kann ein Rotationskolben mit drei Ecken bzw. drei kurzen Seitenkanten, wie er auch in Wankelmotoren zum Einsatz kommt, verstanden werden. Das Kolbengehäuse und/oder das Gehäusevolumen weisen eine zum Rotationskolben korrespondierende Höhe auf, die der Höhe bzw. der Dicke des Rotationskolbens entspricht oder nur geringförmig höher als der Rotationskolben ist. Unter dem Kolbengehäuse muss kein Gehäuse mit einem abgeschlossenen Gehäusevolumen verstanden werden. Vielmehr kann das Gehäusevolumen in einer Umfangsrichtung durch die Innenkontur bzw. eine entsprechende Innenumfangsfläche des Kolbengehäuses umschlossen und zu einer Oberseite und einer Unterseite des Gehäusevolumens geöffnet bzw. unbedeckt sein. So wird das Gehäusevolumen insbesondere durch die trochoidenförmige Gehäuseinnenkontur definiert. Gleichwohl kann das Kolbengehäuse zwei Deckplatten zum Bedecken von wenigstens einem Teil der Oberseite und von wenigstens einem Teil der Unterseite des Gehäusevolumens aufweisen.

Darunter, dass die erste Hochdrucköffnung und die zweite Hochdrucköffnung zum gegenläufigen Einlassen des Hochdruckgases in das Gehäusevolumen ausgestaltet sind kann verstanden werden, dass die Position der ersten Hochdrucköffnung und die Position der zweiten Hochdrucköffnung im Kolbengehäuse und/oder am Gehäusevolumen dahingehend gewählt sind, dass das Hochdruckgas während eines vollständigen Kompressionsbetriebs, bei welchem sich der Rotationskolben um 360° dreht bzw. drehen soll, zum gemeinsamen Antreiben des Rotationskolbens gegenläufig, insbesondere abwechselnd gegenläufig, in das Gehäusevolumen geführt werden kann. Analog kann darunter, dass die erste Niederdrucköffnung und die zweite Niederdrucköffnung zum gegenläufigen Einlassen des Niederdruckgases in das Gehäusevolumen ausgestaltet sind verstanden werden, dass die Position der ersten Niederdrucköffnung und die Position der zweiten Niederdrucköffnung im Kolbengehäuse und/oder am Gehäusevolumen dahingehend gewählt sind, dass das Niederdruckgas während des vollständigen Kompressionsbetriebs gegenläufig, insbesondere gleichzeitig gegenläufig, in das Gehäusevolumen geführt werden kann. Analog können die erste Hochdrucköffnung und die zweite Hochdrucköffnung zum gegenläufigen, insbesondere zum abwechselnd gegenläufigen Auslassen des Hochdruckgases aus dem Gehäusevolumen ausgestaltet sein und die erste Niederdrucköffnung und die zweite Niederdrucköffnung können zum gegenläufigen, insbesondere zum gleichzeitig gegenläufigen Auslassen des Niederdruckgases aus dem Gehäusevolumen ausgestaltet sein.

Unter der Gegenläufigkeit kann ein bidirektionales Leiten des jeweiligen Gases über die Zeit einer vollständigen Umdrehung eines Rotationskolbens während eines Betriebs der Rotationskolbenmaschine verstanden werden. In einem Expansionsbetrieb kann das Niederdruckgas beispielsweise kontinuierlich, gleichzeitig aus der ersten Niederdrucköffnung und aus der zweiten Niederdrucköffnung aus dem Gehäusevolumen geleitet werden. Bei einer Wellenposition von beispielsweise 5° kann Hochdruckgas durch die zweite Hochdrucköffnung in einer Hochdruckgaseinlassrichtung in das Gehäusevolumen geleitet werden, während die erste Hochdrucköffnung verschlossen ist. Dabei wird der Rotationskolben durch das Hochdruckgas im Gehäusevolumen gedreht. Kurz darauf kann die zweite Hochdrucköffnung geschlossen werden, sodass sich das nun im Gehäusevolumen befindliche Hochdruckgas entspannen und durch die Niederdrucköffnungen als Niederdruckgas ausgelassen werden kann. Kurz darauf, wenn die Wellenposition beispielsweise ca. 25° erreicht, kann die erste Hochdrucköffnung geöffnet werden, während die zweite Hochdrucköffnung weiterhin verschlossen bleibt. Nun kann Hochdruckgas durch die ersten Hochdrucköffnung in einer Hochdruckgaseinlassrichtung, die entgegengesetzt zur Hochdruckgaseinlassrichtung des Hochdruckgases durch die zweite Hochdrucköffnung bei der Wellenposition von 5°, also gegenläufig, ist, in das Gehäusevolumen geleitet werden. Ein entsprechender Prozess wird später mit Bezug auf die Figuren im weiteren Detail beschrieben.

Unter dem Gasleitungsnetz kann ein Gasleitungsnetz zum Leiten von beispielsweise Erdgas an verschiedene Haushalte verstanden werden. Die Niederdrucköffnungen und die Hochdrucköffnungen können als an das Gehäusevolumen angrenzende Endabschnitte zugehöriger Gasleitungen verstanden werden. So können die erste Hochdrucköffnung in einem Endabschnitt einer ersten Hochdruckleitung im Kolbengehäuse, die zweite Hochdrucköffnung in einem Endabschnitt einer zweiten Hochdruckleitung im Kolbengehäuse, die erste Niederdrucköffnung in einem Endabschnitt einer ersten Niederdruckleitung im Kolbengehäuse und die zweite Niederdrucköffnung in einem Endabschnitt einer zweiten Niederdruckleitung im Kolbengehäuse verstanden werden. Die Hochdruckleitungen und die Niederdruckleitungen können sich parallel und/oder schräg zueinander erstrecken. Für eine möglichst kompakte Ausgestaltung des Kolbengehäuses kann es hilfreich sein, wenn sich die Hochdruckleitungen und die Niederdruckleitungen im Kolbengehäuse schräg zueinander erstrecken.

Die Rotationskolbenmaschine weist vorzugsweise ein Zahnungs- und/oder Übersetzungsverhältnis von 2:3 von einem Ritzel der Rotationskolbenmaschine zu einem Hohlrad der Rotationskolbenmaschine auf. An den drei Kolbenecken bzw. Kolbenkanten des Rotationskolbens kann jeweils eine Dichtlippe für einen Schleifkontakt an der Gehäuseinnenwandung während eines Betriebs der Rotationskolbenmaschine ausgestaltet sein. Die Rotationskolbenmaschine weist vorzugsweise wenigstens ein Kolbengehäuse auf. Die Rotationskolbenmaschine kann jedoch auch zwei oder mehr Kolbengehäuse aufweisen, die gleich oder im Wesentlichen gleich zueinander ausgestaltet sein können.

Der Rotationskolben kann drei Kolbenecken und zwischen zwei Kolbenecken eine Kolbenbreite aufweisen, wobei eine Exzentrizität des Exzenters zur Exzenterwelle ein Maß in einem Bereich zwischen 5% und 15% der Kolbenbreite und/oder in einem Bereich zwischen 20 mm und 30 mm, insbesondere in einem Bereich zwischen 23 mm und 25 mm, aufweist. Die Kolbenbreite kann in einem Bereich zwischen 150 mm und 250 mm, insbesondere in einem Bereich zwischen 210 mm und 190 mm, liegen. Die Dicke bzw. Höhe des Rotationskolbens kann in einem Bereich zwischen 50 mm und 100 mm, insbesondere in einem Bereich zwischen 70 mm und 75 mm, liegen. Mit einer derart dimensionierten Rotationskolbenmaschine kann ein besonders effizienter Betrieb mit einem entsprechend hohen Wirkungsgrad erzielt werden.

Weiterhin ist es möglich, dass bei dem Kolbengehäuse die kreissegmentförmige Innenkontur des ersten Gehäuseteils ein erstes Zentrum aufweist, die kreissegmentförmige Innenkontur des zweiten Gehäuseteils ein zweites Zentrum aufweist und die trochoidenförmige Gehäuseinnenkontur ein Hauptzentrum aufweist, wobei die erste Hochdrucköffnung eine Exzentrizität zum ersten Zentrum in Richtung des Hauptzentrums aufweist, die erste Niederdrucköffnung eine Exzentrizität zum ersten Zentrum in einer Richtung weg vom Hauptzentrums aufweist, die zweite Hochdrucköffnung eine Exzentrizität zum zweiten Zentrum in Richtung des Hauptzentrums aufweist, und/oder die zweite Niederdrucköffnung eine Exzentrizität zum zweiten Zentrum in einer Richtung weg vom Hauptzentrums aufweist. Damit konnte bei umfangreichen Versuchen im Rahmen der vorliegenden Erfindung ein besonders effizienter Betrieb einer das Kolbengehäuse verwendenden Rotationskolbenmaschine erreicht werden. Die Drehachse der Exzenterwelle liegt vorzugsweise im Hauptzentrum des Kolbengehäuses. Das heißt, die Exzenterwelle ist bevorzugt konzentrisch zum Gehäusevolumen angeordnet.

Gemäß einer bevorzugten Ausführungsform der vorliegenden Erfindung umfasst die Gasströmungseinstelleinheit einen ersten Hochdruck-Drehschieber zum Freigeben und zum Sperren der ersten Hochdrucköffnung, einen zweiten Hochdruck-Drehschieber zum Freigeben und zum Sperren der zweiten Hochdrucköffnung, einen ersten Niederdruck-Drehschieber zum Freigeben und zum Sperren der ersten Niederdrucköffnung und/oder einen zweiten Niederdruck-Drehschieber zum Freigeben und zum Sperren der zweiten Niederdrucköffnung. Bei umfangreichen Versuchen im Rahmen der vorliegenden Erfindung wurde herausgefunden, dass mit Drehschiebern eine besonders langlebige und für die vorliegenden Bedürfnisse zuverlässig betreibbare Ventilart zur Verfügung gestellt werden kann. Mittels Drehschiebern kann auch bei hohen Drehzahlen der Rotationskolbenmaschine von beispielsweise mehreren 1000 U/min zuverlässig die gewünschte, phasenrichtige Steuerung und/oder Regelung der Gasströme in das Gehäusevolumen und aus dem Gehäusevolumen erreicht werden. Unter einem Freigeben oder Öffnen der Niederdrucköffnungen und Hochdrucköffnungen kann ein Ermöglichen einer gewünschten Gasströmung in das Gehäusevolumen und aus dem Gehäusevolumen verstanden werden. Unter einem Sperren oder Schließen der Niederdrucköffnungen und Hochdrucköffnungen kann ein Verhindern einer gewünschten Gasströmung in das Gehäusevolumen und aus dem Gehäusevolumen verstanden werden. Die Drehschieber können die Niederdrucköffnungen und die Hochdrucköffnungen in Abhängigkeit der Rotationslage der Drehschieber für einen Gasfluss in das Gehäusevolumen und/oder aus dem Gehäusevolumen sperren und freigeben. Hierfür sind die Drehschieber mit Durchgangsöffnungen bzw. Strömungsquerschnittsöffnungen versehen, die sich radial über ein bestimmtes Winkelintervall der zylindrischen Grundgestalt der Drehschieber erstrecken. Die Funktionen der Drehschieber, also das Sperren und Freigeben der Niederdrucköffnungen und/oder der Hochdrucköffnungen, kann als Kanten- und/oder Schlitzsteuerung bezeichnet werden. Das heißt, die Drehschieber sind jeweils zum Freigeben und Sperren der Niederdrucköffnungen und/oder der Hochdrucköffnungen mittels Kanten- oder Schlitzsteuerung konfiguriert.

Weiterhin ist es möglich, dass bei einer Rotationskolbenmaschine die Hochdruck-Drehschieber jeweils wenigstens teilweise zylinderförmig mit jeweils einer radialen ersten Hochdruck-Durchgangsöffnung, zum Leiten des Hochdruckgases in das Gehäusevolumen und aus dem Gehäusevolumen, und/oder die Niederdruck-Drehschieber jeweils wenigstens teilweise zylinderförmig mit jeweils einer radialen ersten Niederdruck-Durchgangsöffnung, zum Leiten des Niederdruckgases in das Gehäusevolumen und aus dem Gehäusevolumen, ausgestaltet sind. Das heißt, die jeweiligen Durchgangsöffnungen erstrecken sich nicht parallel zu oder entlang einer Drehachse der Drehschieber, sondern orthogonal zur Drehachse. Damit können die Drehschieber in der Rotationskolbenmaschine platzsparend integriert werden. Insbesondere können Mittel zum Ansteuern der Drehschieber relativ einfach und platzsparend bereitgestellt werden.

Bei einer erfindungsgemäßen Rotationskolbenmaschine kann es weiterhin von Vorteil sein, wenn wenigstens ein Teil der Hochdruck-Drehschieber und wenigstens ein Teil der Niederdruck-Drehschieber jeweils drehbar in einem zylinderförmigen Lagervolumen des Kolbengehäuses positioniert sind. Das heißt, die Drehschieber können wenigstens teilweise integriert in das Kolbengehäuse ausgestaltet sein. Damit ist die Rotationskolbenmaschine besonders kompakt sowie robust ausgestaltet. Mithin kann das Kolbengehäuse ein erstes zylinderförmiges Lagervolumen für den ersten Hochdruck-Drehschieber, ein zweites zylinderförmiges Lagervolumen für den ersten Niederdruck-Drehschieber, ein drittes zylinderförmiges Lagervolumen für den zweiten Hochdruck-Drehschieber und ein viertes zylinderförmiges Lagervolumen für den zweiten Niederdruck-Drehschieber aufweisen.

Darüber hinaus ist es möglich, dass bei einer Rotationskolbenmaschine gemäß der vorliegenden Erfindung im Kolbengehäuse Außenkanäle für eine jeweilige Gasverbindung zwischen den Lagervolumina und einer Umgebung des Kolbengehäuses und Innenkanäle für eine jeweilige Gasverbindung zwischen den Lagervolumina und dem Gehäusevolumen ausgestaltet sind, wobei die Außenkanäle jeweils einen größeren Querschnitt als die Innenkanäle aufweisen. Das heißt, für die jeweilige Gasverbindung zwischen den Lagervolumina und der Umgebung des Kolbengehäuses sind ein erster Außenkanal zwischen dem ersten Lagervolumen und der Umgebung des Lagergehäuses, ein zweiter Außenkanal zwischen dem zweiten Lagervolumen und der Umgebung des Lagergehäuses, ein dritter Außenkanal zwischen dem dritten Lagervolumen und der Umgebung des Lagergehäuses sowie ein vierter Außenkanal zwischen dem vierten Lagervolumen und der Umgebung des Lagergehäuses ausgestaltet. Außerdem sind für die jeweilige Gasverbindung zwischen den Lagervolumina und dem Gehäusevolumen des Kolbengehäuses ein erster Innenkanal zwischen dem ersten Lagervolumen und dem Gehäusevolumen, ein zweiter Innenkanal zwischen dem zweiten Lagervolumen und dem Gehäusevolumen, ein dritter Innenkanal zwischen dem dritten Lagervolumen und dem Gehäusevolumen sowie ein vierter Innenkanal zwischen dem vierten Lagervolumen und dem Gehäusevolumen ausgestaltet, wobei die Innenkanäle jeweils einen kleineren Querschnitt als die zugehörigen Außenkanäle aufweisen. Unter dem Querschnitt kann die Querschnittsfläche und/oder ein Strömungsquerschnitt des jeweiligen Kanals verstanden werden. Die Außenkanäle weisen vorzugsweise die gleichen Querschnittsgrößen auf. Die Querschnitte des ersten Innenkanals und des dritten Innenkanals sind vorzugsweise kleiner als die Querschnitte des zweiten Innenkanals und des vierten Innenkanals. Anders ausgedrückt, die Querschnitte der Innenkanäle zu und/oder mit der ersten Hochdrucköffnung und der zweiten Hochdrucköffnung sind vorzugsweise kleiner als die Querschnitte der Innenkanäle zu und/oder mit der ersten Niederdrucköffnung und der zweiten Niederdrucköffnung. Der erste Innenkanal und der dritte Innenkanal weisen in Form von Hochdruck-Innenkanälen vorzugsweise die gleichen Querschnitte auf. Ferner können der zweite Innenkanal und der vierte Innenkanal in Form von Niederdruck-Innenkanälen die gleichen Querschnitte auf.

Gemäß einer weiteren Ausgestaltungsvariante der vorliegenden Erfindung ist es möglich, dass im Kolbengehäuse Außenkanäle für eine jeweilige Gasverbindung zwischen den Lagervolumina und einer Umgebung des Kolbengehäuses und Innenkanäle für eine jeweilige Gasverbindung zwischen den Lagervolumina und dem Gehäusevolumen ausgestaltet sind, wobei die Außenkanäle und die Innenkanäle in einer Flucht zueinander ausgestaltet sind. Damit können Strömungswiderstände und/oder Gasverwirbelungen zwischen Außenkanal, Lagervolumen und Innenkanal möglichst geringgehalten werden.

Weiterhin ist es bei einer erfindungsgemäßen Rotationskolbenmaschine möglich, dass im Kolbengehäuse Innenkanäle für eine jeweilige Gasverbindung zwischen den Lagervolumina und dem Gehäusevolumen ausgestaltet sind, wobei sich die Innenkanäle, mit Blick auf einen Querschnitt des Kolbengehäuses, zum Gehäusevolumen schräg zueinander hin erstrecken. Damit können die Niederdrucköffnungen und die Hochdrucköffnungen bei einer relativ kompakten Bauweise des Kolbengehäuses trotzdem an den gewünschten Positionen am Gehäusevolumen ausgestaltet sein. Die Innenkanäle zum Gehäusevolumen erstrecken sich insbesondere schräg in Richtung des Hauptzentrums des Gehäusevolumens zueinander hin. Insbesondere erstrecken sich die Innenkanäle in einer Projektion der Innenkanäle x-förmig und/oder doppel-v-förmig zueinander hin.

Eine erfindungsgemäße Rotationskolbenmaschine kann ferner eine Kontrolleinheit aufweisen, die zum Drehen der Drehschieber abhängig von der Drehgeschwindigkeit der Exzenterwelle und/oder von einem Betriebszustand der Rotationskolbenmaschine konfiguriert ist. Damit kann der Druckausgleich zwischen dem Hochdruckgas und dem Niederdruckgas mit der Rotationskolbenmaschine zuverlässig und einfach erreicht werden. Die Drehschieber können hierbei jeweils in die gleiche Richtung oder in unterschiedliche Richtungen gedreht werden. Hierbei kann die Exzenterwelle in einer mechanischen Wirkverbindung mit den Drehschiebern stehen.

Zudem ist der Querschnitt der Hochdrucköffnungen bei einer Rotationskolbenmaschine gemäß der vorliegenden Erfindung vorzugsweise jeweils kleiner als der Querschnitt der Niederdrucköffnungen. Insbesondere kann der Querschnitt der ersten Hochdrucköffnung gleich dem Querschnitt der zweiten Hochdrucköffnung sein und der Querschnitt der ersten Niederdrucköffnung kann gleich dem Querschnitt der zweiten Niederdrucköffnung sein, wobei der Querschnitt der ersten Hochdrucköffnung und der zweiten Hochdrucköffnung jeweils kleiner als der Querschnitt der ersten Niederdrucköffnung und der zweiten Niederdrucköffnung ist. Während eines Betriebs der Rotationskolbenmaschine strömt durch die Hochdrucköffnungen Hochdruckgas, das einen höheren Druck als das Niederdruckgas an den Niederdrucköffnungen aufweist und damit bei gleichem Gasmassenstrom ein geringeres Leitungsvolumen erfordert.. Ansonsten könnten Strömungs- und/oder Kräfteungleichgewichte an und/oder in der Rotationskolbenmaschine sowie am und/oder im Kolbengehäuse resultieren. Durch Ausgestaltung der unterschiedlichen Querschnitte kann dies verhindert werden. Unter dem Querschnitt kann die Querschnittsfläche und/oder die Fläche der jeweiligen Öffnung verstanden werden. Entsprechend ist der Querschnitt der Hochdruck-Durchgangsöffnungen bevorzugt jeweils kleiner als der Querschnitt der Niederdruck-Durchgangsöffnungen.

Gemäß einer weiteren Ausgestaltungsvariante der vorliegenden Erfindung ist es möglich, dass die Rotationskolbenmaschine eine erste Bauteilanordnung, die den dreieckigen Rotationskolben, den Exzenter und das Kolbengehäuse aufweist, und eine zweite Bauteilanordnung, die einen zweiten dreieckigen Rotationskolben, einen zweiten Exzenter der Exzenterwelle und ein zweites, dem ersten Kolbengehäuse entsprechendes Kolbengehäuse aufweist, umfasst. Der zweite Rotationskolben kann rotierbar in einem zweiten Gehäusevolumen des zweiten Kolbengehäuses auf dem zweiten Exzenter positioniert sein, wobei die erste Bauteilanordnung in einer Rotationsrichtung der Exzenterwelle um 180° gedreht zur zweiten Bauteilanordnung angeordnet ist. Die Gasströmungseinstelleinheit kann zum jeweils gegenläufigen Einlassen des Hochdruckgases in das Gehäusevolumen und in das zweite Gehäusevolumen durch die ersten Hochdrucköffnungen und die zweiten Hochdrucköffnungen und/oder zum jeweils gegenläufigen Einlassen des Niederdruckgases in das Gehäusevolumen und in das zweite Gehäusevolumen durch die ersten Niederdrucköffnungen und die zweiten Niederdrucköffnungen konfiguriert sein. Die zweite Bauteilanordnung kann sich demnach dahingehend von der ersten Bauteilanordnung unterscheiden, dass der Rotationskolben in der zweiten Bauteilanordnung um 180° phasenverdreht zum ersten Rotationskolben angeordnet ist. Damit können Massenkräfte und Drehmomente in und/oder an der Rotationkolbenmaschine kompensiert und ein entsprechend ruhiger Betrieb der Rotationkolbenmaschine erreicht werden. Darunter, dass das zweite Kolbengehäuse dem ersten Kolbengehäuse entspricht kann verstanden werden, dass das erste Kolbengehäuse gleich oder im Wesentlichen gleich dem zweiten Kolbengehäuse ausgestaltet ist. So weist auch das zweite Kolbengehäuse ein erstes Gehäuseteil und ein zweites Gehäuseteil auf, wobei am ersten Gehäuseteil eine erste Hochdrucköffnung zum Einlassen von Hochdruckgas in das Gehäusevolumen sowie zum Auslassen von Hochdruckgas aus dem Gehäusevolumen und eine erste Niederdrucköffnung zum Einlassen von Niederdruckgas in das Gehäusevolumen sowie zum Auslassen von Niederdruckgas aus dem Gehäusevolumen ausgestaltet sind. Am zweiten Gehäuseteil des zweiten Kolbengehäuses können eine zweite Hochdrucköffnung zum Einlassen von Hochdruckgas in das Gehäusevolumen sowie zum Auslassen von Hochdruckgas aus dem Gehäusevolumen und eine zweite Niederdrucköffnung zum Einlassen von Niederdruckgas in das Gehäusevolumen sowie zum Auslassen von Niederdruckgas aus dem Gehäusevolumen ausgestaltet sein, wobei die erste Hochdrucköffnung und die zweite Hochdrucköffnung zum gegenläufigen Einlassen des Hochdruckgases in das Gehäusevolumen ausgestaltet sind und die erste Niederdruck-Gasöffnung und die zweite Niederdrucköffnung zum gegenläufigen Einlassen des Niederdruckgases in das Gehäusevolumen ausgestaltet sind. Das erste Kolbengehäuse und das zweite Kolbengehäuse können bei einer erfindungsgemäßen Rotationskolbenmaschine schichtartig, optional nur durch eine Deckplatte zum Bedecken von wenigstens einem Teil des jeweiligen Gehäusevolumens getrennt, übereinander angeordnet sein. Das heißt, eine Rotationskolbenmaschine gemäß der vorliegenden Erfindung kann eine Deckplatte zum Verschließen von wenigstens einer seitlichen Öffnung des ersten Kolbengehäuses und/oder einer seitlichen Öffnung des zweiten Kolbengehäuses sowie zum Beabstanden des ersten Kolbengehäuses und des zweiten Kolbengehäuses voneinander aufweisen. Mittels der Deckplatten kann eine kompakte Rotationskolbenmaschine im Baukastensystem bereitgestellt werden. Die jeweiligen Komponenten sind relativ einfach zu fertigen und zusammenzubauen. Die Verwendung einer Deckplatte oder mehrerer Deckplatten hängt davon ab, ob das erste Kolbengehäuse und das zweite Kolbengehäuse ein an seinen Seiten jeweils offenes oder im Wesentlichen geschlossenes Kolbengehäuse sind. Unter einem im Wesentlichen geschlossenen Kolbengehäuse kann ein Kolbengehäuse verstanden werden, bei welchen abgesehen von den Hochdrucköffnungen und den Niederdrucköffnungen beispielsweise nur eine Durchgangsöffnung zum Positionieren eines Teils der Exzenterwelle im Kolbengehäuse ausgestaltet ist. Gleichwohl können in den Deckplatten sowie im jeweiligen Kolbengehäuse jeweils vier zylinderförmige Lagervolumen, zum Positionieren der Drehschieber darin, in Form von Durchgangsöffnungen ausgestaltet sein. Die zylinderförmigen Lagervolumen der Kolbengehäuse können hierbei einen größeren Querschnitt als die zylinderförmigen Lagervolumen einer oberen und einer unteren Deckplatte aufweisen, sodass Drehschieber, die eine entsprechend gestufte Zylinderform aufweisen können, auf einfache und platzsparende Weise form- und/oder kraftschlüssig und trotzdem drehbar in der Rotationskolbenmaschine positioniert werden können. Eine erfindungsgemäße Rotationskolbenmaschine kann auch drei oder noch mehr Bauteilanordnungen mit einer entsprechenden Anzahl an Kolbengehäusen aufweisen.

Weiterhin ist es bei einer Rotationskolbenmaschine gemäß der vorliegenden Erfindung möglich, dass der erste Hochdruck-Drehschieber zum Freigeben und zum Sperren der ersten Hochdrucköffnungen, der zweite Hochdruck-Drehschieber zum Freigeben und zum Sperren der zweiten Hochdrucköffnungen, der erste Niederdruck-Drehschieber zum Freigeben und zum Sperren der ersten Niederdrucköffnungen und/oder der zweite Niederdruck-Drehschieber zum Freigeben und zum Sperren der zweiten Niederdrucköffnungen ausgestaltet und konfiguriert sind. Das heißt, ein Drehschieber kann jeweils zum Öffnen und Schließen von zwei Gasöffnungen, insbesondere von zwei Hochdrucköffnungen oder zwei Niederdrucköffnungen, ausgestaltet und konfiguriert sein. Damit kann die Rotationskolbenmaschine bei kompakter Bauweise besonders effizient betrieben werden.

Weiterhin ist es bei einer vorstehend beschriebenen Rotationskolbenmaschine erfindungsgemäß möglich, dass die Hochdruck-Drehschieber mit jeweils einer radialen zweiten Hochdruck-Durchgangsöffnung, zum Leiten des Hochdruckgases in das zweite Gehäusevolumen und aus dem zweiten Gehäusevolumen, und/oder die Niederdruck-Drehschieber mit jeweils einer radialen zweiten Niederdruck-Durchgangsöffnung, zum Leiten des Niederdruckgases in das zweite Gehäusevolumen und aus dem zweiten Gehäusevolumen, ausgestaltet sind. Auch damit lässt sich eine besonders kompakte Bauweise der Rotationskolbenmaschine realisieren.

Von besonderem Vorteil ist es, wenn sich bei einer Rotationskolbenmaschine gemäß der vorliegenden Erfindung die erste Hochdruck-Durchgangsöffnung in einem Bereich zwischen 60° und 120° verdreht zur zweiten Hochdruck-Durchgangsöffnung radial durch den jeweiligen Hochdruck-Drehschieber erstreckt und/oder wenn sich die erste Niederdruck-Durchgangsöffnung in einem Bereich zwischen 60° und 120° verdreht zur zweiten Niederdruck-Durchgangsöffnung radial durch den jeweiligen Niederdruck-Drehschieber erstreckt. Insbesondere erstreckt sich die erste Hochdruck-Durchgangsöffnung um 90° verdreht zur zweiten Hochdruck-Durchgangsöffnung radial durch den jeweiligen Hochdruck-Drehschieber und/oder die erste Niederdruck-Durchgangsöffnung erstreckt sich um 90° verdreht zur zweiten Niederdruck-Durchgangsöffnung radial durch den jeweiligen Niederdruck-Drehschieber. Mit anderen Worten, der Winkel in einem Bereich zwischen 60° und 120° bzw. mit einem Wert von 90° besteht zwischen einer ersten Achse entlang einer Erstreckungsrichtung durch die erste Hochdruck-Durchgangsöffnung und einer zweiten Achse entlang einer Erstreckungsrichtung durch die zweite Hochdruck-Durchgangsrichtung. Dies gilt analog für die Winkel zwischen den Niederdruck-Durchgangsöffnungen. Damit kann die Rotationskolbenmaschine besonders effizient sowie effektiv betrieben werden.

Bei Versuchen im Rahmen der vorliegenden Erfindung hat sich herausgestellt, dass es von Vorteil ist, wenn die Hochdruck-Durchgangsöffnungen und/oder die Niederdruck-Durchgangsöffnungen jeweils einen rechteckigen oder im Wesentlichen rechteckigen Querschnitt aufweisen. Damit konnte insbesondere eine relativ zuverlässige Steuerung und/oder Regelung der gewünschten ein- und auszulassenden Gasmengen erreicht werden. Bei kreisrunden und/oder elliptischen Querschnitten hat sich dies als schwieriger herausgestellt. Darüber hinaus sind mit rechteckigen Durchgangsöffnungen höhere Volumenströme möglich, wodurch die Rotationskolbenmaschine entsprechend effektiv betrieben werden kann.

Eine vorteilhafte Weiterbildung der vorgeschlagenen Rotationskolbenmaschine kann ferner wenigstens einen Druckpufferspeicher zum Druckpuffern von Niederdruckgas und/oder Hochdruckgas am Kolbengehäuse und/oder am zweiten Kolbengehäuse aufweisen, wobei die Druckpufferspeicher eine gasleitungsnetzseitige Gasöffnung zum Herstellen einer Gasverbindung mit dem Gasleitungsnetz, eine kolbengehäuseseitige erste Gasöffnung zum Herstellen einer Gasverbindung zwischen dem Gasleitungsnetz und dem ersten Kolbengehäuse und/oder eine kolbengehäuseseitige zweite Gasöffnung zum Herstellen einer Gasverbindung zwischen dem Gasleitungsnetz und dem zweiten Kolbengehäuse aufweisen. Durch Verwendung der Druckpufferspeicher lässt sich insbesondere die Betriebssicherheit sowie die Betriebsstabilität der Drehschieber bzw. der Rotationskolbenmaschine verbessern. Die Rotationskolbenmaschine kann insbesondere einen ersten Druckpufferspeicher zum Druckpuffern von Hochdruckgas zu und aus der ersten Hochdrucköffnung oder zu und aus den beiden ersten Hochdrucköffnungen, einen zweiten Druckpufferspeicher zum Druckpuffern von Niederdruckgas zu und aus der ersten Niederdrucköffnung oder zu und aus den beiden ersten Niederdrucköffnungen, einen dritten Druckpufferspeicher zum Druckpuffern von Hochdruckgas zu und aus der zweiten Hochdrucköffnung oder zu und aus den beiden zweiten Hochdrucköffnungen und einen vierten Druckpufferspeicher zum Druckpuffern von Niederdruckgas zu und aus der zweiten Niederdrucköffnung oder zu und aus den beiden zweiten Niederdrucköffnungen aufweisen.

Außerdem kann bei einer Rotationskolbenmaschine gemäß der vorliegenden Erfindung der Druckpufferspeicher an der gasleitungsnetzseitigen Gasöffnung, an der ersten kolbengehäuseseitigen Gasöffnung und/oder an der zweiten kolbengehäuseseitige Gasöffnung jeweils einen Verbindungsflansch zum mechanischen Verbinden des Druckpufferspeichers mit dem Gasleitungsnetz, dem ersten Kolbengehäuse und/oder dem zweiten Kolbengehäuse aufweisen. Damit lässt sich auf kompakte Weise eine stabile mechanische Verbindung zwischen dem jeweiligen Druckpufferspeicher und den Kolbengehäusen herstellen. Die Druckpufferspeicher können jeweils ein Puffervolumen bzw. ein entsprechendes Druckpufferspeicher-Gehäusevolumen in einem Bereich zwischen 5 Liter und 200 Liter, insbesondere in einem Bereich zwischen 50 Liter und 150 Liter, aufweisen.

Gemäß einem weiteren Aspekt der vorliegenden Erfindung wird ein Druckpufferspeicher zum Druckpuffern von Niederdruckgas und/oder Hochdruckgas an einem Kolbengehäuse und/oder an einem zweiten Kolbengehäuse in einer wie vorstehend beschriebenen Rotationskolbenmaschine zur Verfügung gestellt. Der Druckpufferspeicher weist entsprechend eine gasleitungsnetzseitige Gasöffnung zum Herstellen einer Gasverbindung mit dem Gasleitungsnetz, eine kolbengehäuseseitige erste Gasöffnung zum Herstellen einer Gasverbindung zwischen dem Gasleitungsnetz und dem ersten Kolbengehäuse und/oder eine kolbengehäuseseitige zweite Gasöffnung zum Herstellen einer Gasverbindung zwischen dem Gasleitungsnetz und dem zweiten Kolbengehäuse auf. Der Druckpufferspeicher kann außerdem jeweils einen Verbindungsflansch an der gasleitungsnetzseitigen Gasöffnung, an der ersten kolbengehäuseseitigen Gasöffnung und/oder an der zweiten kolbengehäuseseitigen Gasöffnung zum mechanischen Verbinden des Druckpufferspeichers mit dem Gasleitungsnetz, dem ersten Kolbengehäuse und/oder dem zweiten Kolbengehäuse umfassen. Ferner kann ein solcher Druckpufferspeicher ein Puffervolumen in einem Bereich zwischen 5 Liter und 200 Liter, insbesondere in einem Bereich zwischen 50 Liter und 150 Liter, aufweisen.

Weiterhin wird im Rahmen der vorliegenden Erfindung ein Drehschieber zur Verwendung als Hochdruck-Drehschieber oder Niederdruck-Drehschieber in einer wie vorstehend beschriebenen Rotationskolbenmaschine zur Verfügung gestellt. Ein solcher Drehschieber umfasst einen wenigstens teilweise zylinderförmigen Grundkörper mit einer radialen ersten Durchgangsöffnung und einer radialen zweiten Durchgangsöffnung, wobei sich die erste Durchgangsöffnung in einem Bereich zwischen 60° und 120° verdreht zur zweiten Durchgangsöffnung radial durch den Grundkörper erstreckt. Die Zylinderform des Grundkörpers ist vorzugsweise stufenförmig mit einem größeren Zylinderdurchmesser in einem mittleren Bereich des jeweiligen Drehschiebers und jeweils einem kleineren Zylinderdurchmesser in einem äußeren Bereich des jeweiligen Drehschiebers, wobei die Durchgangsöffnungen im mittleren Bereich des Grundkörpers ausgestaltet sind. Abhängig von der Anzahl der Kolbengehäuse, für welche der jeweilige Drehschieber bereitgestellt werden soll, kann der Drehschieber auch mehr als zwei Durchgangsöffnungen, beispielsweise drei oder vier Durchgangsöffnungen, aufweisen. Zwei Durchgangsöffnungen sind vorzugsweise um 90° verdreht zueinander angeordnet. Drei Durchgangsöffnungen können beispielsweise um 60° verdreht zueinander angeordnet sein. Die erste Durchgangsöffnung und/oder die zweite Durchgangsöffnung weist bevorzugt einen rechteckigen oder im Wesentlichen rechteckigen Querschnitt auf.

Gemäß einem weiteren Aspekt der vorliegenden Erfindung wird ein Gasdruck-Regelsystem zur Verwendung in einem Gasleitungsnetz zum Regeln von unterschiedlichen Gasdrücken im Gasleitungsnetz bereitgestellt. Das Gasdruck-Regelsystem umfasst eine Hochdruckleitung zum Leiten von Hochdruckgas, eine Niederdruckleitung zum Leiten von Niederdruckgas, und eine wie vorstehend beschriebene Rotationskolbenmaschine zum Komprimieren von Niederdruckgas aus der Niederdruckleitung in Hochdruckgas für die Hochdruckleitung im Kompressionsbetrieb und zum Expandieren von Hochdruckgas aus der Hochdruckleitung in Niederdruckgas für die Niederdruckleitung im Expansionsbetrieb. Damit bringt das erfindungsgemäße Gasdruck-Regelsystem die gleichen Vorteile mit sich, wie sie ausführlich mit Bezug auf die erfindungsgemäße Vorrichtung beschrieben worden sind.

Ergänzend wird im Rahmen der vorliegenden Erfindung ein Verfahren zum Betreiben eines solchen Gasdruck-Regelsystems zur Verfügung gestellt, wobei die Hochdruck-Drehschieber und/oder die Niederdruck-Drehschieber zum Durchführen des Kompressionsbetriebs oder des Expansionsbetriebs abhängig von der Drehgeschwindigkeit der Exzenterwelle und/oder von einem Betriebszustand der Rotationskolbenmaschine gedreht werden.

Damit bringt auch das erfindungsgemäße Verfahren die vorstehend beschriebenen Vorteile mit sich. Während des Kompressionsbetriebs wird die Exzenterwelle in eine erste Richtung gedreht und im Expansionsbetrieb wird die Exzenterwelle in eine der ersten Richtung entgegengesetzte zweite Richtung gedreht. Im Rahmen des Verfahrens wird das Gasdruck-Regelsystem insbesondere in einem Gasleitungsnetz für einen Druckausgleich und/oder einer Druckverschiebung zwischen dem Hochdruckgas und dem Niederdruckgas durchgeführt. Unter dem Gasleitungsnetz kann insbesondere ein Gasleitungsnetz zum Versorgen von Haushalten mit Erdgas verstanden werden.

Der Betrieb der Rotationskolbenmaschine wird bevorzugt dahingehend gesteuert und/oder geregelt, dass die Drehzahl der Exzenterwelle und die Drehzahl des Drehschiebers oder der Drehschieber möglichst konstant bzw. in einem vordefinierten Drehzahlverhältnis gehalten werden, wobei die Phasenlage des Rotationskolbens oder der Rotationskolben und des Drehschiebers bzw. der Drehschieber zueinander ebenfalls möglichst stets konstant ist. Bei davon abweichenden Betriebspunkten würden sich für dieselbe Rotationskolbenmaschine aufgrund veränderter Drucklagen in den Hochdruck- und Niederdruckleitungen größere Druckdifferenzen und damit Strömungsdruckverluste ergeben. Diese Strömungsdruckverluste stellen im Sinne der Thermodynamik Exergieverluste dar, deren Auftreten die bei der Expansion gewinnbare Arbeit vermindern oder bei der Verdichtung des Arbeitsstoffs die der Rotationskolbenmaschine zuzuführende Arbeit erhöhen. Je stärker die Drucklagen in einem Betriebspunkt vom Auslegungsbetriebspunkt abweichen, desto größer sind diese Verluste. Eine Verringerung dieser Verluste kann dadurch erzielt werden, dass die Öffnungs- und Schließzeitpunkte der Drehschieber, beispielsweise mittels der Kontrolleinheit, abhängig von Drucklagen, die durch eine Ermittlungseinheit der Rotationskolbenmaschine und/oder des Gasdruck-Regelsystems ermittelt werden können, eines aktuellen Betriebspunktes der Rotationskolbenmaschine angepasst werden. Diese Anpassung kann durch die Verwendung der phasenverstellbaren Drehschieber erzielt werden, mit welchen die Öffnungs- und Schließzeitpunkte und somit das Öffnungsintervall der Drehschieber entsprechend den Drucklagen in den Hochdruckleitungen und/oder Niederdruckleitungen an und/oder in der Rotationskolbenmaschine eingestellt werden können. Da sich diese Drucklagen während des Betriebs der Rotationskolbenmaschine ändern können, ist es vorteilhaft, wenn auch die Phasenlage der Drehschieber gegenüber der Verdrängerbewegung des Rotationskolbens bzw. der Rotationskolben im Betrieb angepasst werden kann.

Ein weiterer Aspekt der Erfindung betrifft ein Computerprogrammprodukt, umfassend Befehle, die bewirken, dass mit einer wie vorstehend beschriebenen Rotationskolbenmaschine das ebenfalls vorstehend beschriebene Verfahren ausgeführt wird. Darüber hinaus wird ein Speichermittel, insbesondere ein nichtflüchtiges und/oder computerlesbares Speichermittel, mit einem darauf gespeicherten Computerprogrammprodukt zur Verfügung gestellt. Damit bringen auch das erfindungsgemäße Computerprogrammprodukt sowie das Speichermittel die vorstehend beschriebenen Vorteile mit sich. Das Computerprogrammprodukt kann als computerlesbarer Anweisungscode in jeder geeigneten Maschinensprache und/oder Programmiersprache wie beispielsweise in JAVA, C++, C# und/oder Python implementiert sein. Das Computerprogrammprodukt kann auf einem Speichermittel wie einer Datendisk, einem Wechsellaufwerk, oder einem eingebauten Speicher/Prozessor abgespeichert sein. Der Anweisungscode kann einen Computer oder andere programmierbare Geräte wie ein Steuergerät derart programmieren, dass die gewünschten Funktionen ausgeführt werden. Ferner kann das Computerprogrammprodukt in einem Netzwerk wie beispielsweise dem Internet bereitgestellt werden und/oder sein, von dem es bei Bedarf von einem Nutzer heruntergeladen werden kann. Das Computerprogrammprodukt kann sowohl mittels einer Software, als auch mittels einer oder mehrerer spezieller elektronischer Schaltungen, d. h. in Hardware oder in beliebig hybrider Form, das heißt mittels Software-Komponenten und Hardware-Komponenten, realisiert werden und/oder sein.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:
- Figur 1: eine Rotationskolbenmaschine mit einem Kolbengehäuse gemäß einer ersten Ausführungsform der vorliegenden Erfindung,
- Figur 2: eine Rotationskolbenmaschine mit zwei Kolbengehäusen und vier Druckpufferspeichern gemäß einer zweiten Ausführungsform der vorliegenden Erfindung,
- Figur 3: einen erfindungsgemäßen Hochdruck-Drehschieber,
- Figur 4: einen erfindungsgemäßen Niederdruck-Drehschieber,
- Figur 5: die in Figur 2 dargestellte Rotationskolbenmaschine in einem erfindungsgemäßen Gasdruck-Regelsystem in einem Expansionsbetrieb,
- Figur 6: die in Figur 2 dargestellte Rotationskolbenmaschine in einem erfindungsgemäßen Gasdruck-Regelsystem in einem Kompressionsbetrieb,
- Figur 7: ein Kennliniendiagramm zum Erläutern eines Expansionsbetriebs,
- Figur 8: ein Kennliniendiagramm zum Erläutern eines Kompressionsbetriebs, und
- Figuren 9: bis 11 die in Fig. 1 gezeigte Rotationskolbenmaschine in unterschiedlichen Betriebszuständen zum Erläutern eines Expansionsbetriebs
- Figur 12: ein Kolbengehäuse für die in Fig. 2 gezeigte Rotationskolbenmaschine, und
- Figur 13: einen Druckpufferspeicher für die in Fig. 2 gezeigte Rotationskolbenmaschine.

Elemente mit gleicher Funktion und Wirkungsweise sind in den Figuren jeweils mit den gleichen Bezugszeichen versehen.

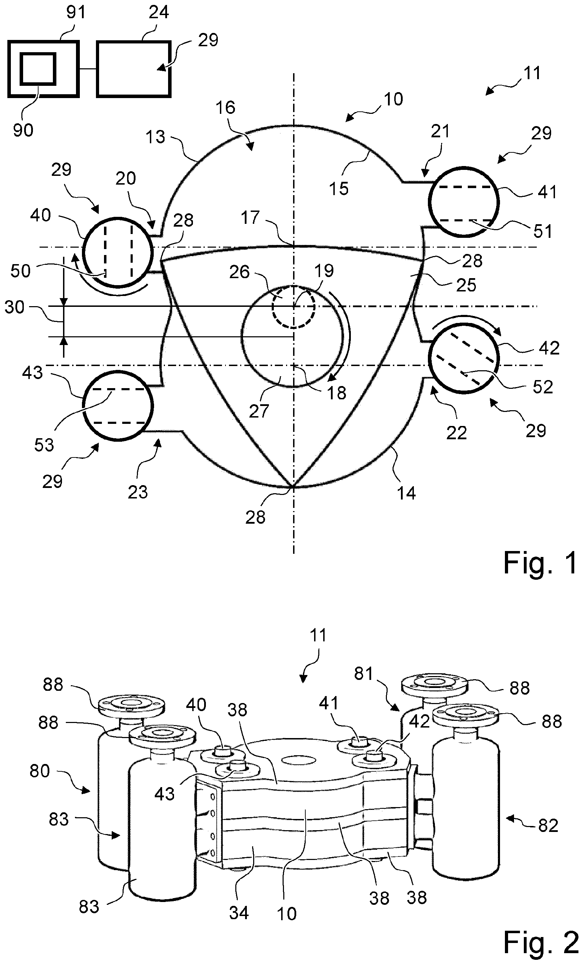

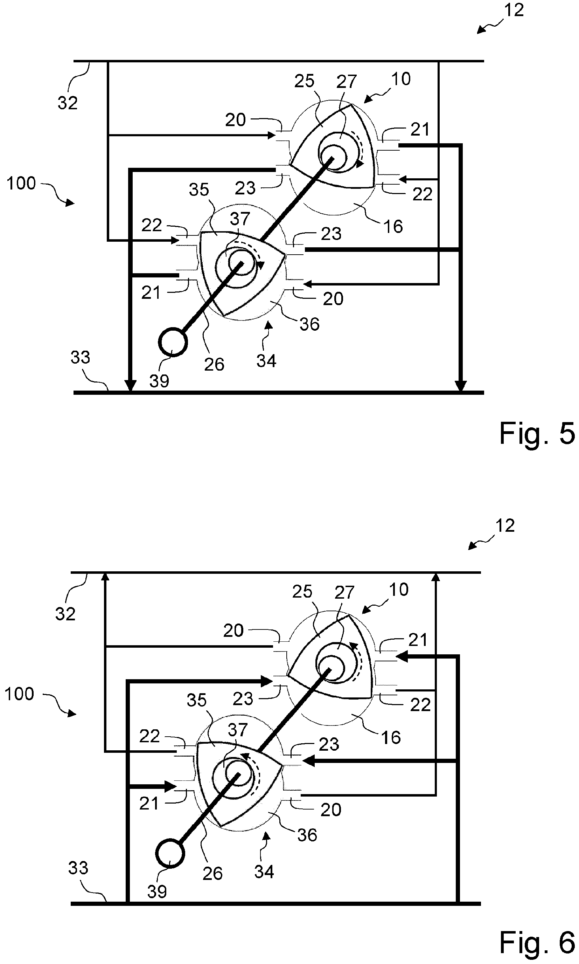

Fig. 1 zeigt eine Rotationskolbenmaschine 11 zum Regeln von unterschiedlichen Gasdrücken in einem in Fig. 5 und Fig. 6 gezeigten Gasleitungsnetz 12 durch einen Kompressionsbetrieb zum Komprimieren von Niederdruckgas in Hochdruckgas und durch einen Expansionsbetrieb zum Expandieren von Hochdruckgas in Niederdruckgas. Die gezeigte Rotationskolbenmaschine 11 weist einen dreieckigen Rotationskolben 25, eine Exzenterwelle 26 mit einem Exzenter 27 und ein Kolbengehäuse 10 auf. Der Rotationskolben 25 ist rotierbar im Gehäusevolumen 16 auf dem Exzenter 27 positioniert. Das Kolbengehäuse 10 weist einen ersten Gehäuseteil 13 mit einer kreissegmentförmigen Innenkontur und einen zweiten Gehäuseteil 14 mit einer kreissegmentförmigen Innenkontur auf, wobei der erste Gehäuseteil 13 und der zweite Gehäuseteil 14 zusammen eine Gehäuseinnenwandung 15 mit einer trochoidenförmigen Gehäuseinnenkontur zum Definieren eines Gehäusevolumens 16 für den darin rotier- bzw. drehbaren Rotationskolben 25 der Rotationskolbenmaschine 11 bilden.

Am ersten Gehäuseteil 13 ist eine erste Hochdrucköffnung 20 zum Einlassen von Hochdruckgas in das Gehäusevolumen 16 sowie zum Auslassen von Hochdruckgas aus dem Gehäusevolumen 16 und eine erste Niederdrucköffnung 21 zum Einlassen von Niederdruckgas in das Gehäusevolumen 16 sowie zum Auslassen von Niederdruckgas aus dem Gehäusevolumen 16 ausgestaltet. Am zweiten Gehäuseteil 14 sind eine zweite Hochdrucköffnung 22 zum Einlassen von Hochdruckgas in das Gehäusevolumen 16 sowie zum Auslassen von Hochdruckgas aus dem Gehäusevolumen 16 und eine zweite Niederdrucköffnung 23 zum Einlassen von Niederdruckgas in das Gehäusevolumen 16 sowie zum Auslassen von Niederdruckgas aus dem Gehäusevolumen 16 ausgestaltet. Die erste Hochdrucköffnung 20 und die zweite Hochdrucköffnung 22 sind zum gegenläufigen Einlassen des Hochdruckgases in das Gehäusevolumen 16 sowie zum gegenläufigen Auslassen des Hochdruckgases aus dem Gehäusevolumen 16 ausgestaltet. Analog sind die erste Niederdrucköffnung 21 und die zweite Niederdrucköffnung 23 zum gegenläufigen Einlassen des Niederdruckgases in das Gehäusevolumen 16 sowie zum gegenläufigen bzw. bidirektionalen Auslassen des Niederdruckgases aus dem Gehäusevolumen 16 ausgestaltet. So können in einem Expansionsbetrieb der Rotationskolbenmaschine 11 Hochdruckgas abwechselnd gegenläufig durch die erste Hochdrucköffnung 20 und die zweite Hochdrucköffnung 22 in das Gehäusevolumen 16 und als expandiertes bzw. druckreduziertes Niederdruckgas gleichzeitig gegenläufig durch die erste Niederdrucköffnung 21 und die zweite Niederdrucköffnung 23 aus dem Gehäusevolumen 16 geleitet werden. In einem Kompressionsbetrieb der Rotationskolbenmaschine 11 können Niederdruckgas gleichzeitig gegenläufig durch die erste Niederdrucköffnung 21 und die zweite Niederdrucköffnung 23 in das Gehäusevolumen 16 und als komprimiertes bzw. druckbeaufschlagtes Hochdruckgas abwechselnd gegenläufig durch die erste Hochdrucköffnung 20 und die zweite Hochdrucköffnung 22 aus dem Gehäusevolumen 16 geleitet werden.

Bei dem in Fig. 1 dargestellten Kolbengehäuse 10 weisen die kreissegmentförmige Innenkontur des ersten Gehäuseteils 13 ein erstes Zentrum 17, die kreissegmentförmige Innenkontur des zweiten Gehäuseteils 14 ein zweites Zentrum 18 und die trochoidenförmige Gehäuseinnenkontur ein Hauptzentrum 19 mittig zwischen dem ersten Zentrum 17 und dem zweiten Zentrum 18 auf. Die erste Hochdrucköffnung 20 weist am Gehäusevolumen 16 eine Exzentrizität zum ersten Zentrum 17 in Richtung des Hauptzentrums 19 auf, die erste Niederdrucköffnung 21 weist am Gehäusevolumen 16 eine Exzentrizität zum ersten Zentrum 17 in einer Richtung weg vom Hauptzentrums 19 auf, die zweite Hochdrucköffnung 22 weist am Gehäusevolumen 16 eine Exzentrizität zum zweiten Zentrum 18 in Richtung des Hauptzentrums 19 auf und die zweite Niederdrucköffnung 23 weist am Gehäusevolumen 16 eine Exzentrizität zum zweiten Zentrum 18 in einer Richtung weg vom Hauptzentrum 19 auf. Dies bezieht sich jeweils auf eine Mittelachse der Hochdrucköffnungen 20, 22, der Niederdrucköffnungen 21, 23 sowie der verschiedenen Zentren 17, 18, 19.

Bei der in Fig. 1 dargestellten Rotationskolbenmaschine 11 weist der Rotationskolben 25 drei Kolbenecken 28 und zwischen zwei Kolbenecken 28 eine Kolbenbreite von ca. 200 mm auf, wobei die Exzentrizität 30 des Exzenters 27 zur Exzenterwelle 26 ca. 25 mm aufweist. Wie ferner in Fig. 1 zu erkennen ist der Querschnitt bzw. die Querschnittsfläche der Hochdrucköffnungen 20, 22 am Gehäusevolumen 16 jeweils kleiner als der Querschnitt der Niederdrucköffnungen 21, 23 am Gehäusevolumen 16. Darüber hinaus weist die Rotationskolbenmaschine 11 eine Gasströmungseinstelleinheit 29 zum Freigeben der Hochdrucköffnungen 20, 22 und der Niederdrucköffnungen 21, 23 zum gegenläufigen Einlassen von Hochdruckgas aus der in Fig. 5 und Fig. 6 gezeigten Hochdruckleitung 32 des Gasleitungsnetztes 12 in das Gehäusevolumen 16 durch die erste Hochdrucköffnung 20 und durch die zweite Hochdrucköffnung 22, zum gegenläufigen Auslassen von Niederdruckgas in Form von expandiertem Hochdruckgas aus der ersten Niederdrucköffnung 21 und aus der zweiten Niederdrucköffnung 23 die Niederdruckleitung 33 des Gasleitungsnetztes 12 während des Expansionsbetriebs; zum gegenläufigen Einlassen von Niederdruckgas aus der Niederdruckleitung 33 des Gasleitungsnetzes 12 in das Gehäusevolumen 16 durch die erste Niederdrucköffnung 21 und die zweite Niederdrucköffnung 23 sowie zum gegenläufigen Auslassen von Hochdruckgas in Form von komprimiertem Niederdruckgas aus der ersten Hochdrucköffnung 20 und aus der zweiten Hochdrucköffnung 22 in eine Hochdruckleitung 32 des Gasleitungsnetzes 12 während des Kompressionsbetriebs. Hierzu weist die Gasströmungseinstelleinheit 29 einen ersten Hochdruck-Drehschieber 40 zum Freigeben und zum Sperren der ersten Hochdrucköffnung 20, einen zweiten Hochdruck-Drehschieber 42 zum Freigeben und zum Sperren der zweiten Hochdrucköffnung 22, einen ersten Niederdruck-Drehschieber 41 zum Freigeben und zum Sperren der ersten Niederdrucköffnung 21 und/oder einen zweiten Niederdruck-Drehschieber 43 zum Freigeben und zum Sperren der zweiten Niederdrucköffnung 23 auf. Die Hochdruck-Drehschieber 40, 42 weisen jeweils eine radiale erste Hochdruck-Durchgangsöffnung 50, zum Leiten des Hochdruckgases in das Gehäusevolumen 16 und aus dem Gehäusevolumen 16, auf. Die Niederdruck-Drehschieber 41, 43 weisen jeweils eine radiale erste Niederdruck-Durchgangsöffnung 51, zum Leiten des Niederdruckgases in das Gehäusevolumen 16 und aus dem Gehäusevolumen 16, auf.

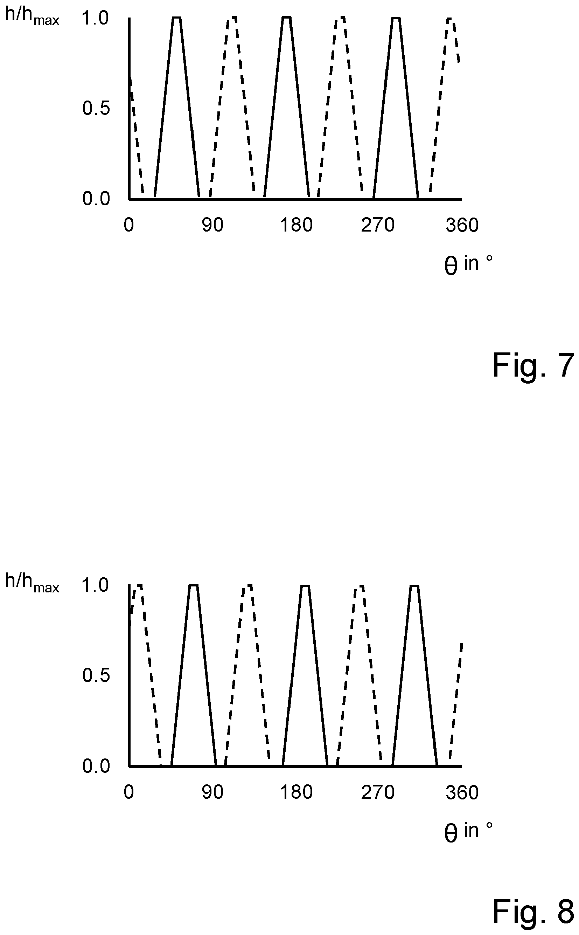

Die in Fig. 1 gezeigte Rotationskolbenmaschine weist eine Kontrolleinheit 24 auf, die zum Drehen der Drehschieber 40, 41, 42, 43 abhängig von der Drehgeschwindigkeit der Exzenterwelle 26 und/oder von einem Betriebszustand der Rotationskolbenmaschine 11 konfiguriert ist. Die Kontrolleinheit 24 ist gemäß der dargestellten Ausführungsform ein Teil der Gasströmungseinstelleinheit 29. Die gezeigte Rotationskolbenmaschine 11 weist ferner ein Speichermittel 91 mit einem darauf gespeicherten Computerprogrammprodukt 90 auf. Das Speichermittel 91 steht mit der Kontrolleinheit 24 in Signalverbindung. Das Computerprogrammprodukt 90, umfassend Befehle zum Betreiben der Rotationskolbenmaschine 11 gemäß einem Verfahren, das später mit Bezug auf die Figuren 7 bis 11 beschrieben wird.

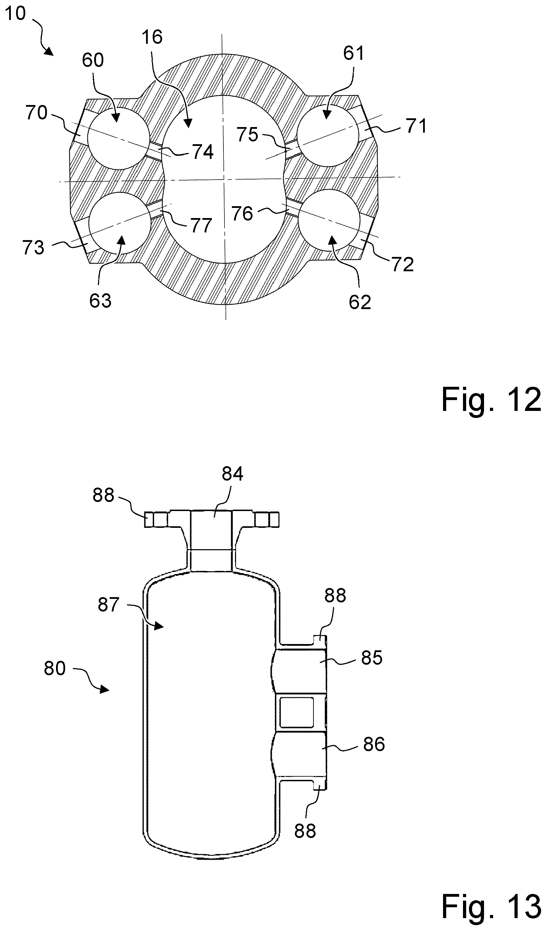

In Fig. 2 ist eine Rotationskolbenmaschine 11 gemäß einer zweiten Ausführungsform der vorliegenden Erfindung gezeigt. Die Rotationskolbenmaschine 11 gemäß dieser Ausführungsform weist eine erste Bauteilanordnung auf, die den dreieckigen Rotationskolben 25, den Exzenter 27 und das Kolbengehäuse 10 gemäß der in Fig. 1 gezeigten Ausführungsform umfasst. Die gezeigte Rotationskolbenmaschine 11 weist ferner eine zweite Bauteilanordnung mit einem zweiten Kolbengehäuse 34 auf. Außerdem weist die Rotationsmaschine 11 drei Deckplatten 38 zum Abdecken der Seitenflächen der Kolbengehäuse 10, 34 auf. Wie in Fig. 2 dargestellt, sind die Deckplatten 38 und die Kolbengehäuse 10, 34 schichtartig übereinander bzw. aneinander angeordnet. Genauer gesagt befindet sich eine Deckplatte 38 sandwichartig zwischen dem ersten Kolbengehäuse 10 und dem zweiten Kolbengehäuse 34. Das erste Kolbengehäuse 10 und das zweite Kolbengehäuse 34 befinden sich wiederum sandwichartig zwischen einer oberen Deckplatte 38 und einer unteren Deckplatte 38. Die Deckplatten 38 weisen jeweils eine Durchgangsöffnung zum Positionieren der Exzenterwelle 26 darin bzw. in der Rotationskolbenmaschine 11 sowie jeweils vier zylinderförmige Lagervolumen zum Lagern der Hochdruck-Drehschieber 40, 42 und der Niederdruck-Drehschieber 41, 43 auf. Wie mit Blick auf Fig. 2 zu erkennen, sind der erste Hochdruck-Drehschieber 40 zum Freigeben und zum Sperren der beiden ersten Hochdrucköffnungen 20, der zweite Hochdruck-Drehschieber 42 zum Freigeben und zum Sperren der beiden zweiten Hochdrucköffnungen 22, der erste Niederdruck-Drehschieber 41 zum Freigeben und zum Sperren der beiden ersten Niederdrucköffnungen 21 und der zweite Niederdruck-Drehschieber 43 zum Freigeben und zum Sperren der beiden zweiten Niederdrucköffnungen 23 ausgestaltet und konfiguriert. Die in Fig. 2 dargestellte Rotationskolbenmaschine 11 weist ferner vier Druckpufferspeicher 80, 81, 82, 83 zum Druckpuffern von Niederdruckgas und Hochdruckgas am Kolbengehäuse 10 sowie am zweiten Kolbengehäuse 34 auf, die später mit Bezug auf Fig. 13 im Detail beschrieben werden.

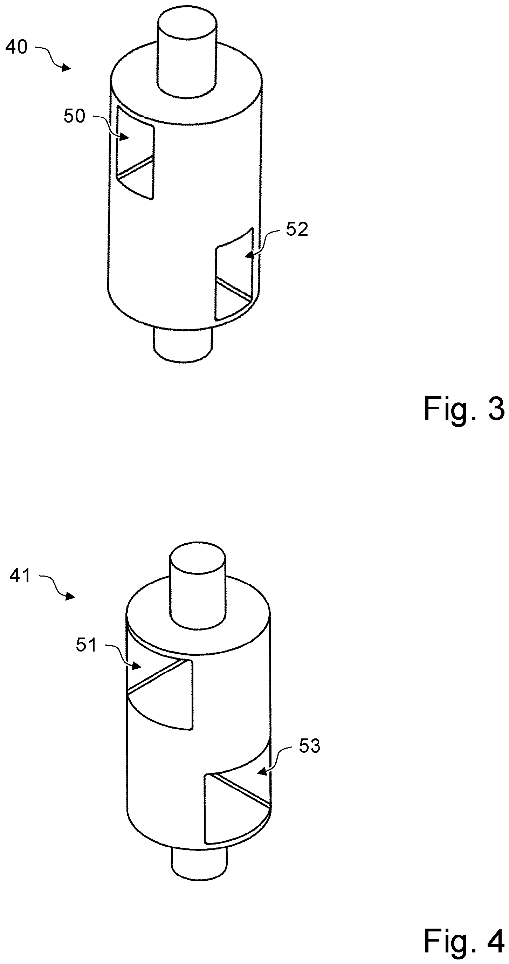

In Fig. 3 und Fig. 4 sind der erste Hochdruck-Drehschieber 40 und der erste Niederdruck-Drehschieber 41 der in Fig. 2 gezeigten Ausführungsform der Rotationskolbenmaschine 11 im Detail dargestellt. Genauer gesagt ist in Fig. 3 ein erster Hochdruck-Drehschieber 40 mit einer radialen ersten Hochdruck-Durchgangsöffnung 50 zum Leiten des Hochdruckgases in das erste Gehäusevolumen 16 und aus dem ersten Gehäusevolumen 16 und einer radialen zweiten Hochdruck-Durchgangsöffnung 52, zum Leiten des Hochdruckgases in das zweite Gehäusevolumen 36 und aus dem zweiten Gehäusevolumen 36 dargestellt. Die erste Hochdruck-Durchgangsöffnung 50 erstreckt sich um 90° um die Längsachse des Hochdruck-Drehschiebers 40 verdreht zur zweiten Hochdruck-Durchgangsöffnung 52 radial durch den Hochdruck-Drehschieber 40. Fig. 4 zeigt einen ersten Niederdruck-Drehschieber 41 mit einer radialen ersten Niederdruck-Durchgangsöffnung 51 zum Leiten des Niederdruckgases in das erste Gehäusevolumen 16 und aus dem ersten Gehäusevolumen 16 und einem radialen zweiten Niederdruck-Durchgangsöffnung 53 zum Leiten des Niederdruckgases in das zweite Gehäusevolumen 36 und aus dem zweiten Gehäusevolumen 36. Die erste Niederdruck-Durchgangsöffnung 51 erstreckt sich um 90° um die Längsachse des Niederdruck-Drehschiebers verdreht zur zweiten Niederdruck-Durchgangsöffnung 53 radial durch den Niederdruck-Drehschieber 41. Die Hochdruck-Durchgangsöffnungen 50, 52 und die Niederdruck-Durchgangsöffnungen 51, 53 weisen jeweils einen rechteckigen oder im Wesentlichen rechteckigen Querschnitt auf. Die Drehschieber 40, 41 weisen jeweils einen gestuft zylinderförmigen Grundkörper auf.

In den Figuren 5 und 6 ist ein Gasdruck-Regelsystem 100 zur Verwendung in einem Gasleitungsnetz 12 zum Regeln von unterschiedlichen Gasdrücken im Gasleitungsnetz 12 dargestellt. Das Gasdruck-Regelsystem 100 weist eine Rotationskolbenmaschine 11 gemäß der zweiten Ausführungsform auf, die in einer Art Explosionsdarstellung bzw. für ein besseres Verständnis der Funktionsweise in einer aufgeteilten Ansicht gezeigt ist. In Fig. 5 ist außerdem die zweite Bauteilanordnung im weiteren Detail dargestellt. Die zweite Bauteilanordnung weist neben dem zweiten Kolbengehäuse 34 noch einen zweiten dreieckigen Rotationskolben 35 und einen zweiten Exzenter 37 der Exzenterwelle 26 auf. Der zweite Rotationskolben 35 ist rotierbar in einem zweiten Gehäusevolumen 36 des zweiten Kolbengehäuses 34 auf bzw. an dem zweiten Exzenter 37 positioniert. Wie in Fig. 5 dargestellt, ist die erste Bauteilanordnung in einer Rotationsrichtung der Exzenterwelle 26 um 180° gedreht zur zweiten Bauteilanordnung angeordnet. Mit anderen Worten, der zweite Rotationskolben 35 ist in Rotationsrichtung um 180° gedreht zum ersten Rotationskolben 25 positioniert. Weiterhin weist die Rotationskolbenmaschine 11 einen Motor/Generator 39 auf, der mechanisch mit der Exzenterwelle 26 verbunden bzw. verbindbar ist. Der Motor/Generator 39 funktioniert zum Drehen der Exzenterwelle 26 im Kompressionsbetrieb in eine erste Richtung als Motor und zum Drehenlassen der Exzenterwelle 26 im Expansionsbetrieb durch das Hochdruckgas in eine der ersten Richtung entgegengesetzte zweite Richtung als Generator. Die Hochdruckleitung 32 bzw. die entsprechende Hochdruckseite ist symbolisch mit einer dünneren Linie als die Niederdruckleitungen 33 bzw. die entsprechende Niederdruckseite dargestellt.

In Fig. 5 ist ein Expansionsbetrieb dargestellt, bei welchem der Motor/Generator 39 als Generator betrieben wird, indem die Exzenterwelle 26 durch Hochdruckgas, das in die Gehäusevolumen 16, 36 strömt bzw. geleitet wird und dort die Rotationskolben 25, 35 antreibt, gedreht wird. Durch die Bewegung der Rotationskolben 25, 35 in den Gehäusevolumen 16, 36 wird das dort befindliche Hochdruckgas bei geöffneten Niederdrucköffnungen expandiert und als Niederdruckgas in die Niederdruckleitung 33 ausgelassen. In Fig. 6 ist ein Kompressionsbetrieb dargestellt, bei welchem der Motor/Generator 39 als Motor betrieben die Exzenterwelle 26 antreibt und über ein Drehen der Rotationskolben 25, 35 Niederdruckgas aus der Niederdruckleitung 33 in das erste Gehäusevolumen 16 und in das zweite Gehäusevolumen 36 leitet. Durch die Bewegung der Rotationskolben 25, 35 in den Gehäusevolumen 16, 36 wird das dort befindliche Niederdruckgas verdichtet und als Hochdruckgas in die Hochdruckleitung 32 ausgelassen bzw. gedrückt.

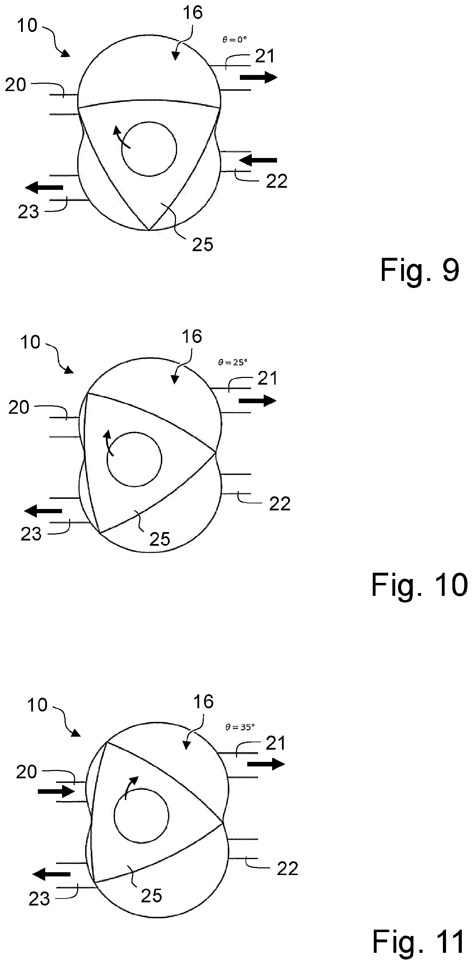

Mit Bezug auf die zusammengehörenden Figuren 7 und 9 bis 11 wird anschließend ein Verfahren zum Betreiben eines wie vorstehend beschriebenen Gasdruck-Regelsystems 100 mit einer Rotationskolbenmaschine 11 gemäß Fig. 1 in einem Expansionsbetrieb beschrieben. Im Rahmen des Verfahrens werden hierfür die Hochdrucköffnungen 20, 22 und die Niederdrucköffnungen 21, 23 zum gegenläufigen Einlassen von Hochdruckgas aus der Hochdruckleitung 32 in das Gehäusevolumen 16 durch die erste Hochdrucköffnung 20 und durch die zweite Hochdrucköffnung 22 sowie zum gegenläufigen Auslassen von Niederdruckgas in Form von expandiertem Hochdruckgas aus der ersten Niederdrucköffnung 21 und aus der zweiten Niederdrucköffnung 23 in die Niederdruckleitung 33 während des Expansionsbetriebs mittels der Gasströmungseinstelleinheit 29 und insbesondere mittels der Drehschieber 40, 41, 42, 43 teilweise gleichzeitig und teilweise zu unterschiedlichen Zeitpunkten freigegeben. Dies soll mit Bezug auf die Figuren 7 und 9 bis 11 verdeutlicht werden. Mit Blick auf Fig. 7 und Fig. 9 befindet sich der Rotationskolben 25 in einer 0° Stellung. In dieser sind die erste Niederdrucköffnung 21 und die zweite Niederdrucköffnung 23 geöffnet. Auch die zweite Hochdrucköffnung 22 ist noch geöffnet. Die erste Hochdrucköffnung 20 ist geschlossen. So wird Niederdruckgas aus den beiden Niederdrucköffnungen 21, 23 aus dem Gehäusevolumen 16 geleitet und Hochdruckgas durch die zweite Hochdrucköffnung 22 in das Gehäusevolumen 16 geleitet. Während sich der Rotationskolben nun weiter in die in Fig. 10 gezeigte Position dreht, wird die zweite Hochdrucköffnung 22 geschlossen bzw. gesperrt, um ein weiteres Einströmen von Hochdruckgas durch die zweite Hochdrucköffnung 22 in das Gehäusevolumen 16 zu verhindern. Gleichzeitig kann das durch die zweite Hochdrucköffnung 22 in das Gehäusevolumen 16 geleitetet Hochdruckgas im Gehäusevolumen 16, genauer gesagt im Gehäusevolumen 16 des unteren bzw. zweiten Gehäuseteils 14 expandieren. Dieser Prozess findet, wenn auch bereits fortgeschritten, gleichzeitig im oberen bzw. ersten Gehäuseteil 13 statt. Dies spiegelt sich entsprechend im Kennliniendiagramm gemäß Fig. 7 wider, bei welchem die gestrichelte Linie dem Gasmassenstrom des Hochdruckgases durch die zweite Hochdrucköffnung 22 entspricht und die durchgehende Linie dem Gasmassenstrom des Hochdruckgases durch die erste Hochdrucköffnung 20 entspricht. Dreht sich der Rotationskolben nun von der in Fig. 10 gezeigten Stellung in die Stellung gemäß Fig. 11 weiter, wird die erste Hochdrucköffnung 20 zum Einlassen von Hochdruckgas durch die erste Hochdrucköffnung 20 in das Gehäusevolumen 16 freigegeben bzw. geöffnet. Wie in den Figuren 9 bis 11 zu erkennen, werden das Hochdruckgas abwechselnd und das Niederdruckgas gleichzeitig gegenläufig in das Gehäusevolumen 16 geleitet. Eine volle Umdrehung des Rotationskolbens 25 während des Expansionsbetriebs kann insbesondere mit Blick auf Fig. 7 erkannt werden.

Die beschriebenen Verfahrensschritte laufen bei einer Rotationskolbenmaschine gemäß Fig. 2 in der zweiten Bauteilanordnung abgesehen von einer Phasenverschiebung von möglichst genau 180° gleichzeitig und insgesamt entsprechend doppelt bzw. gleichzeitig ab. Die Drehschieber 40, 41, 42, 43 weisen in diesem Fall die um 90° zueinander verdrehten Durchgangsöffnungen 50, 51, 52, 53 gemäß Fig. 3 und Fig. 4 auf.

In Fig. 8 ist der Druckverlauf des Hochdruckgases in einem analogen Kompressionsbetrieb der Rotationskolbenmaschine 11 dargestellt, wobei die gestrichelte Linie wieder dem Gasmassenstrom des Hochdruckgases durch die zweite Hochdrucköffnung 22 entspricht und die durchgehende Linie dem Gasmassenstrom des Hochdruckgases durch die erste Hochdrucköffnung 20 entspricht. Die Rotationskolbenmaschine 11 ist jeweils für einen Funktionsbetrieb mit mehreren 1000 U/min konfiguriert.

Fig. 12 zeigt ein Kolbengehäuse 10 mit vier zylinderförmigen Lagervolumen 60, 61, 62, 63 zum drehbaren Lagern des mittleren Teils der Hochdruck-Drehschieber 40, 42 und des mittleren Teils der Niederdruck-Drehschieber 41, 43 darin. Das Kolbengehäuse 10 weist ferner Außenkanäle 70, 71, 72, 73 für eine jeweilige Gasverbindung zwischen den Lagervolumina 60, 61, 62, 63 und einer Umgebung des Kolbengehäuses 10 sowie Innenkanäle 74, 75, 76, 77 für eine jeweilige Gasverbindung zwischen den Lagervolumina 60, 61, 62, 63 und dem Gehäusevolumen 16 auf, wobei die Außenkanäle 70, 71, 72, 73 jeweils einen größeren Querschnitt als die Innenkanäle 74, 75, 76, 77 aufweisen. Wie in Fig. 12 zu erkennen, sind die Außenkanäle 70, 71, 72, 73 und die Innenkanäle 74, 75, 76, 77 am zugehörigen Lagervolumen 60, 61, 62, 63 jeweils in einer Flucht zueinander ausgestaltet. Außerdem erstrecken sich die Innenkanäle 74, 75, 76, 77 zum Gehäusevolumen 16 hin schräg zueinander. Anders ausgedrückt, zwischen einer Längsachse des ersten Innenkanals 74 und einer Längsachse des vierten Innenkanals 77 ist in Projektion dieser Innenkanäle 74, 77 mit Blick auf den gezeigten Querschnitt ein Winkel, insbesondere ein Winkel in einem Bereich zwischen 80° und 30°, gebildet. Dasselbe trifft in analoger Weise auf schräge Anordnung des zweiten Innenkanals 75 zum dritten Innenkanal 76 zu.

In Fig. 13 ist ein Druckpufferspeicher 80 zum Druckpuffern von Niederdruckgas und/oder Hochdruckgas an einem Kolbengehäuse 10 sowie an einem zweiten Kolbengehäuse 34 in einer wie vorstehend beschriebenen Rotationskolbenmaschine dargestellt. Der Druckpufferspeicher 80 weist eine gasleitungsnetzseitige Gasöffnung 84 zum Herstellen einer Gasverbindung mit dem Gasleitungsnetz 12, eine erste kolbengehäuseseitige Gasöffnung 85 zum Herstellen einer Gasverbindung zwischen dem Gasleitungsnetz 12 und dem ersten Kolbengehäuse 10 und eine zweite kolbengehäuseseitige Gasöffnung 86 zum Herstellen einer Gasverbindung zwischen dem Gasleitungsnetz 12 und dem zweiten Kolbengehäuse 34 auf. Bei der Verwendung mit einer Rotationskolbenmaschine 10 gemäß Fig. 1 kann auf die zweite Gasöffnung 86 verzichtet werden. Der gezeigte Druckpufferspeicher 80 weist ferner jeweils einen Verbindungsflansch 88 an der gasleitungsnetzseitigen Gasöffnung 84, zum mechanischen Verbinden des Druckpufferspeichers 80 mit dem Gasleitungsnetz 12, an der ersten kolbengehäuseseitigen Gasöffnung 85, zum mechanischen Verbinden des Druckpufferspeichers 80 mit dem ersten Kolbengehäuse 10 und an der zweiten kolbengehäuseseitige Gasöffnung 86, zum mechanischen Verbinden des Druckpufferspeichers 80 mit dem zweiten Kolbengehäuse 34, auf. Ein Puffervolumen 87 beträgt ca. 100 Liter.

Die Erfindung lässt neben den dargestellten Ausführungsformen weitere Gestaltungsgrundsätze zu. Das heißt, die Erfindung soll nicht auf die mit Bezug auf die Figuren erläuterten Ausführungsbeispiele beschränkt betrachtet werden.

### Bezugszeichenliste

- 10: Kolbengehäuse
- 11: Rotationskolbenmaschine
- 12: Gasleitungsnetz
- 13: erster Gehäuseteil
- 14: zweiter Gehäuseteil
- 15: Gehäuseinnenwandung
- 16: Gehäusevolumen
- 17: erstes Zentrum
- 18: zweites Zentrum
- 19: Hauptzentrum
- 20: erste Hochdrucköffnung
- 21: erste Niederdrucköffnung
- 22: zweite Hochdrucköffnung
- 23: zweite Niederdrucköffnung
- 24: Kontrolleinheit
- 25: Rotationskolben
- 26: Exzenterwelle
- 27: Exzenter
- 28: Kolbenecke
- 29: Gasströmungseinstelleinheit
- 30: Exzentrizität
- 32: Hochdruckleitung
- 33: Niederdruckleitung
- 34: zweites Kolbengehäuse
- 35: zweiter Rotationskolben
- 36: zweites Gehäusevolumen
- 37: zweiter Exzenter
- 38: Deckplatte
- 39: Motor/Generator
- 40: erster Hochdruck-Drehschieber
- 41: erster Niederdruck-Drehschieber
- 42: zweiter Hochdruck-Drehschieber
- 43: zweiter Niederdruck-Drehschieber
- 50: erste Hochdruck-Durchgangsöffnung
- 51: erste Niederdruck-Durchgangsöffnung
- 52: zweite Hochdruck-Durchgangsöffnung
- 53: zweite Niederdruck-Durchgangsöffnung
- 60: Lagervolumen
- 61: Lagervolumen
- 62: Lagervolumen
- 63: Lagervolumen
- 70: Außenkanal
- 71: Außenkanal
- 72: Außenkanal
- 73: Außenkanal
- 74: Innenkanal
- 75: Innenkanal
- 76: Innenkanal
- 77: Innenkanal
- 80: Druckpufferspeicher
- 81: Druckpufferspeicher
- 82: Druckpufferspeicher
- 83: Druckpufferspeicher
- 84: gasleitungsnetzseitige Gasöffnung
- 85: erste kolbengehäuseseitige Gasöffnung
- 86: zweite kolbengehäuseseitige Gasöffnung
- 87: Puffervolumen
- 88: Verbindungsflansch
- 90: Computerprogrammprodukt
- 91: Speichermittel
- 100: Gasdruck-Regelsystem

## Patentansprüche

1. Rotationskolbenmaschine (11) zum Regeln von unterschiedlichen Gasdrücken in einem Gasleitungsnetz (12) durch einen Kompressionsbetrieb zum Komprimieren von Niederdruckgas in Hochdruckgas und durch einen Expansionsbetrieb zum Expandieren von Hochdruckgas in Niederdruckgas, aufweisend:
- ein Kolbengehäuse (10), das einen ersten Gehäuseteil (13) mit einer kreissegmentförmigen Innenkontur und einen zweiten Gehäuseteil (14) mit einer kreissegmentförmigen Innenkontur aufweist, wobei der erste Gehäuseteil (13) und der zweite Gehäuseteil (14) zusammen eine Gehäuseinnenwandung (15) mit einer trochoidenförmigen Gehäuseinnenkontur zum Definieren eines Gehäusevolumens (16) bilden,
- einen dreieckigen Rotationskolben (25), der rotierbar im Gehäusevolumen (16) angeordnet ist,
- eine Exzenterwelle (26) mit einem Exzenter (27), und
- eine Gasströmungseinstelleinheit (29) zum Einstellen einer Gasströmung in das Gehäusevolumen (16) und einer Gasströmung aus dem Gehäusevolumen (16),
**dadurch gekennzeichnet,**
**dass** am ersten Gehäuseteil (13) eine erste Hochdrucköffnung (20) zum Einlassen von Hochdruckgas in das Gehäusevolumen (16) sowie zum Auslassen von Hochdruckgas aus dem Gehäusevolumen (16) und eine erste Niederdrucköffnung (21) zum Einlassen von Niederdruckgas in das Gehäusevolumen (16) sowie zum Auslassen von Niederdruckgas aus dem Gehäusevolumen (16) ausgestaltet sind, und dass am zweiten Gehäuseteil (14) eine zweite Hochdrucköffnung (22) zum Einlassen von Hochdruckgas in das Gehäusevolumen (16) sowie zum Auslassen von Hochdruckgas aus dem Gehäusevolumen (16) und eine zweite Niederdrucköffnung (23) zum Einlassen von Niederdruckgas in das Gehäusevolumen (16) sowie zum Auslassen von Niederdruckgas aus dem Gehäusevolumen (16) ausgestaltet sind, wobei die Gasströmungseinstelleinheit (29) zum gegenläufigen Einlassen des Hochdruckgases in das Gehäusevolumen (16) durch die erste Hochdrucköffnung (20) und die zweite Hochdrucköffnung (22) und/oder zum gegenläufigen Einlassen des Niederdruckgases in das Gehäusevolumen (16) durch die erste Niederdrucköffnung (21) und die zweite Niederdrucköffnung (23) konfiguriert ist.

2. Rotationskolbenmaschine (11) nach Anspruch 1,
**dadurch gekennzeichnet,**
**dass** die Gasströmungseinstelleinheit (29) einen ersten Hochdruck-Drehschieber (40) zum Freigeben und zum Sperren der ersten Hochdrucköffnung (20), einen zweiten Hochdruck-Drehschieber (42) zum Freigeben und zum Sperren der zweiten Hochdrucköffnung (22), einen ersten Niederdruck-Drehschieber (41) zum Freigeben und zum Sperren der ersten Niederdrucköffnung (21) und/oder einen zweiten Niederdruck-Drehschieber (43) zum Freigeben und zum Sperren der zweiten Niederdrucköffnung (23) aufweist, wobei insbesondere die Hochdruck-Drehschieber (40, 42) jeweils wenigstens teilweise zylinderförmig mit jeweils einer radialen ersten Hochdruck-Durchgangsöffnung (50), zum Leiten des Hochdruckgases in das Gehäusevolumen (16) und aus dem Gehäusevolumen (16), und/oder die Niederdruck-Drehschieber (41, 43) jeweils wenigstens teilweise zylinderförmig mit jeweils einer radialen ersten Niederdruck-Durchgangsöffnung (51), zum Leiten des Niederdruckgases in das Gehäusevolumen (16) und aus dem Gehäusevolumen (16), ausgestaltet sind.

3. Rotationskolbenmaschine (11) nach Anspruch 2,
**dadurch gekennzeichnet,**
**dass** wenigstens ein Teil der Hochdruck-Drehschieber (40, 42) und wenigstens ein Teil der Niederdruck-Drehschieber (41, 43) jeweils drehbar in einem zylinderförmigen Lagervolumen (60, 61, 62, 63) des Kolbengehäuses (10) positioniert sind, wobei insbesondere im Kolbengehäuse (10) Außenkanäle (70, 71, 72, 73) für eine jeweilige Gasverbindung zwischen den Lagervolumina (60, 61, 62, 63) und einer Umgebung des Kolbengehäuses (10) und Innenkanäle (74, 75, 76, 77) für eine jeweilige Gasverbindung zwischen den Lagervolumina (60, 61, 62, 63) und dem Gehäusevolumen (16) ausgestaltet sind, wobei die Außenkanäle (70, 71, 72, 73) jeweils einen größeren Querschnitt als die Innenkanäle (74, 75, 76, 77) aufweisen.

4. Rotationskolbenmaschine (11) nach Anspruch 3,
**dadurch gekennzeichnet,**
**dass** im Kolbengehäuse (10) Außenkanäle (70, 71, 72, 73) für eine jeweilige Gasverbindung zwischen den Lagervolumina (60, 61, 62, 63) und einer Umgebung des Kolbengehäuses (10) und Innenkanäle (74, 75, 76, 77) für eine jeweilige Gasverbindung zwischen den Lagervolumina (60, 61, 62, 63) und dem Gehäusevolumen (16) ausgestaltet sind, wobei die Außenkanäle (70, 71, 72, 73) und die Innenkanäle (74, 75, 76, 77) in einer Flucht zueinander ausgestaltet sind.

5. Rotationskolbenmaschine (11) nach einem der Ansprüche 3 bis 4,
**dadurch gekennzeichnet,**
**dass** im Kolbengehäuse (10) Innenkanäle (74, 75, 76, 77) für eine jeweilige Gasverbindung zwischen den Lagervolumina (60, 61, 62, 63) und dem Gehäusevolumen (16) ausgestaltet sind, wobei sich die Innenkanäle (74, 75, 76, 77) zum Gehäusevolumen (16) schräg zueinander hin erstrecken, und/oder eine Kontrolleinheit (24), die zum Drehen der Drehschieber (40, 41, 42, 43) abhängig von der Drehgeschwindigkeit der Exzenterwelle (26) und/oder von einem Betriebszustand der Rotationskolbenmaschine (11) konfiguriert ist.

6. Rotationskolbenmaschine (11) nach einem der voranstehenden Ansprüche,
**dadurch gekennzeichnet,**
**dass** der Querschnitt der Hochdrucköffnungen (20, 22) jeweils kleiner als der Querschnitt der Niederdrucköffnungen (21, 23) ist.

7. Rotationskolbenmaschine (11) nach einem der voranstehenden Ansprüche,
**gekennzeichnet durch**
eine erste Bauteilanordnung, die den dreieckigen Rotationskolben (25), den Exzenter (27) und das Kolbengehäuse (10) aufweist, und eine zweite Bauteilanordnung, die einen zweiten dreieckigen Rotationskolben (35), einen zweiten Exzenter (37) der Exzenterwelle (26) und ein zweites, dem ersten Kolbengehäuse (10) entsprechendes Kolbengehäuse (34) aufweist, wobei der zweite Rotationskolben (35) rotierbar in einem zweiten Gehäusevolumen (36) des zweiten Kolbengehäuses (34) auf dem zweiten Exzenter (37) positioniert ist, wobei die erste Bauteilanordnung in einer Rotationsrichtung der Exzenterwelle (26) um 180° gedreht zur zweiten Bauteilanordnung angeordnet ist, und wobei die Gasströmungseinstelleinheit (29) zum jeweils gegenläufigen Einlassen des Hochdruckgases in das Gehäusevolumen (16) und in das zweite Gehäusevolumen (36) **durch** die ersten Hochdrucköffnungen (20) und die zweiten Hochdrucköffnungen (22) und/oder zum jeweils gegenläufigen Einlassen des Niederdruckgases in das Gehäusevolumen (16) und in das zweite Gehäusevolumen (36) **durch** die ersten Niederdrucköffnungen (21) und die zweiten Niederdrucköffnungen (23) konfiguriert ist, wobei insbesondere der erste Hochdruck-Drehschieber (40) zum Freigeben und zum Sperren der ersten Hochdrucköffnungen (20), der zweite Hochdruck-Drehschieber (42) zum Freigeben und zum Sperren der zweiten Hochdrucköffnungen (22), der erste Niederdruck-Drehschieber (41) zum Freigeben und zum Sperren der ersten Niederdrucköffnungen (21) und/oder der zweite Niederdruck-Drehschieber (43) zum Freigeben und zum Sperren der zweiten Niederdrucköffnungen (23) ausgestaltet und konfiguriert sind.

8. Rotationskolbenmaschine (11) nach Anspruch 7,
**dadurch gekennzeichnet,**
**dass** die Hochdruck-Drehschieber (40, 42) mit jeweils einer radialen zweiten Hochdruck-Durchgangsöffnung (52), zum Leiten des Hochdruckgases in das zweite Gehäusevolumen (36) und aus dem zweiten Gehäusevolumen (36), und/oder die Niederdruck-Drehschieber (41, 43) mit jeweils einer radialen zweiten Niederdruck-Durchgangsöffnung (53), zum Leiten des Niederdruckgases in das zweite Gehäusevolumen (36) und aus dem zweiten Gehäusevolumen (36), ausgestaltet sind, insbesondere dass sich die erste Hochdruck-Durchgangsöffnung (50) in einem Bereich zwischen 60° und 120° verdreht zur zweiten Hochdruck-Durchgangsöffnung (52) radial durch den jeweiligen Hochdruck-Drehschieber (40, 42) erstreckt und/oder dass sich die erste Niederdruck-Durchgangsöffnung (51) in einem Bereich zwischen 60° und 120° verdreht zur zweiten Niederdruck-Durchgangsöffnung (53) radial durch den jeweiligen Niederdruck-Drehschieber (41, 43) erstreckt.

9. Rotationskolbenmaschine (11) nach einem der Ansprüche 2 bis 8,
**dadurch gekennzeichnet,**
**dass** die Hochdruck-Durchgangsöffnungen (50, 52) und/oder die Niederdruck-Durchgangsöffnungen (51, 53) jeweils einen rechteckigen oder im Wesentlichen rechteckigen Querschnitt aufweisen.

10. Rotationskolbenmaschine (11) nach einem der voranstehenden Ansprüche,
**gekennzeichnet durch,**
wenigstens einen Druckpufferspeicher (80, 81, 82, 83) zum Druckpuffern von Niederdruckgas und/oder Hochdruckgas am Kolbengehäuse (10) und/oder am zweiten Kolbengehäuse (34), aufweisend eine gasleitungsnetzseitige Gasöffnung (84) zum Herstellen einer Gasverbindung mit dem Gasleitungsnetz (12), eine kolbengehäuseseitige erste Gasöffnung (85) zum Herstellen einer Gasverbindung zwischen dem Gasleitungsnetz (12) und dem ersten Kolbengehäuse (10) und/oder eine kolbengehäuseseitige zweite Gasöffnung (86) zum Herstellen einer Gasverbindung zwischen dem Gasleitungsnetz (12) und dem zweiten Kolbengehäuse (34), insbesondere dass der Druckpufferspeicher (80, 81, 82, 83) an der gasleitungsnetzseitigen Gasöffnung (84), an der ersten kolbengehäuseseitigen Gasöffnung (85) und/oder an der zweiten kolbengehäuseseitige Gasöffnung (86) jeweils einen Verbindungsflansch (88) zum mechanischen Verbinden des Druckpufferspeichers (80, 81, 82, 83) mit dem Gasleitungsnetz (12), dem ersten Kolbengehäuse (10) und/oder dem zweiten Kolbengehäuse (34) aufweist.

11. Rotationskolbenmaschine (11) nach Anspruch 10,
**dadurch gekennzeichnet,**
**dass** der Druckpufferspeicher (80, 81, 82, 83) ein Puffervolumen (87) in einem Bereich zwischen 5 Liter und 200 Liter aufweist.

12. Druckpufferspeicher (80, 81, 82, 83) zum Druckpuffern von Niederdruckgas und/oder Hochdruckgas an einem Kolbengehäuse (10) und/oder an einem zweiten Kolbengehäuse (34) in einer Rotationskolbenmaschine (11) nach einem der voranstehenden Ansprüche, aufweisend eine gasleitungsnetzseitige Gasöffnung (84) zum Herstellen einer Gasverbindung mit dem Gasleitungsnetz (12), eine kolbengehäuseseitige erste Gasöffnung (85) zum Herstellen einer Gasverbindung zwischen dem Gasleitungsnetz (12) und dem ersten Kolbengehäuse (10) und/oder eine kolbengehäuseseitige zweite Gasöffnung (86) zum Herstellen einer Gasverbindung zwischen dem Gasleitungsnetz (12) und dem zweiten Kolbengehäuse (34).

13. Druckpufferspeicher (80, 81, 82, 83) nach Anspruch 12,
**gekennzeichnet durch,**
jeweils einen Verbindungsflansch (88) an der gasleitungsnetzseitigen Gasöffnung (84), an der ersten kolbengehäuseseitigen Gasöffnung (85) und/oder an der zweiten kolbengehäuseseitigen Gasöffnung (86) zum mechanischen Verbinden des Druckpufferspeichers (80, 81, 82, 83) mit dem Gasleitungsnetz (12), dem ersten Kolbengehäuse (10) und/oder dem zweiten Kolbengehäuse (34), und/oder ein Puffervolumen (87) in einem Bereich zwischen 5 Liter und 200 Liter.

14. Drehschieber (40, 41, 42, 43) zur Verwendung als Hochdruck-Drehschieber (40, 42) oder Niederdruck-Drehschieber (41, 43) in einer Rotationskolbenmaschine (11) nach einem der Ansprüche 1 bis 11, aufweisend einen wenigstens teilweise zylinderförmigen Grundkörper mit einer radialen ersten Durchgangsöffnung (50, 51) und einer radialen zweiten Durchgangsöffnung (52, 53), wobei sich die erste Durchgangsöffnung (50, 51) in einem Bereich zwischen 60° und 120° verdreht zur zweiten Durchgangsöffnung (52, 53) radial durch den Grundkörper erstreckt, insbesondere
dass die erste Durchgangsöffnung (50, 52) und/oder die zweite Durchgangsöffnung (51, 53) einen rechteckigen oder im Wesentlichen rechteckigen Querschnitt aufweisen.

15. Gasdruck-Regelsystem (100) zur Verwendung in einem Gasleitungsnetz (12) zum Regeln von unterschiedlichen Gasdrücken im Gasleitungsnetz (12), aufweisend eine Hochdruckleitung (32) zum Leiten von Hochdruckgas, eine Niederdruckleitung (33) zum Leiten von Niederdruckgas, und eine Rotationskolbenmaschine (11) nach einem der Ansprüche 1 bis 11 zum Komprimieren von Niederdruckgas aus der Niederdruckleitung (33) in Hochdruckgas für die Hochdruckleitung (32) im Kompressionsbetrieb und zum Expandieren von Hochdruckgas aus der Hochdruckleitung (32) in Niederdruckgas für die Niederdruckleitung (33) im Expansionsbetrieb.

16. Verfahren zum Betreiben eines Gasdruck-Regelsystems (100) nach Anspruch 15, wobei die Hochdruck-Drehschieber (40, 42) und/oder die Niederdruck-Drehschieber (41, 43) zum Durchführen des Kompressionsbetriebs oder des Expansionsbetriebs abhängig von der Drehgeschwindigkeit der Exzenterwelle (26) und/oder von einem Betriebszustand der Rotationskolbenmaschine (11) gedreht werden.

17. Computerprogrammprodukt (90), umfassend Befehle, die bewirken, dass mit einer Rotationskolbenmaschine (11) nach einem der Ansprüche 1 bis 11 das Verfahren nach Anspruch 16 ausgeführt wird.

18. Speichermittel (91) mit einem darauf gespeicherten Computerprogrammprodukt (90) nach Anspruch 17.
